# EUROPÄISCHE PATENTSCHRIFT

(11) **EP 2 566 726 B1**
(45) Veröffentlichungstag und Bekanntmachung des Hinweises auf die Patenterteilung: **24.12.2014**
(21) Anmeldenummer: 11716499.6
(22) Anmeldetag: 08.04.2011
(51) Int. Cl.: B60R 21/13

(54) **RAHMENVORRICHTUNG FÜR EIN ÜBERROLLSCHUTZSYSTEM UND ÜBERROLLSCHUTZSYSTEM MIT EINER RAHMENVORRICHTUNG**
FRAME ARRANGEMENT FOR A ROLL-OVER PROTECTION SYSTEM, AND ROLL-OVER PROTECTION SYSTEM WITH A FRAME ARRANGEMENT
DISPOSITIF DE CADRE POUR UNE STRUCTURE DE PROTECTION CONTRE LE RENVERSEMENT ET STRUCTURE DE PROTECTION CONTRE LE RENVERSEMENT COMPORTANT UN DISPOSITIF DE CADRE

(30) Priorität: 30.07.2010 DE 102010036776; 04.05.2010 DE 102010016784
(43) Veröffentlichungstag der Anmeldung: 13.03.2013
(73) Patentinhaber: Salzburger Aluminium AG, 5651 Lend (AT)
(72) Erfinder: GARNWEIDNER, Peter, A-5112 Lamprechtshausen (AT); LINDHUBER, Georg, A-4952 Weng (AT)
(74) Vertreter: Kotitschke & Heurung Partnerschaft mbB
(86) Internationale Anmeldenummer: PCT/EP2011/055481
(87) Internationale Veröffentlichungsnummer: WO 2011/138123

(56) Entgegenhaltungen:
- EP-A1- 0 752 344
- DE-A1- 3 905 470
- DE-A1- 19 750 457
- DE-A1-102008 032 503

## Beschreibung

Die Erfindung betrifft eine Rahmenvorrichtung für ein Überrollschutzsystem für ein Fahrzeug, insbesondere für ein Kraftfahrzeug. Weiterhin betrifft die Erfindung ein Überrollschutzsystem für ein Fahrzeug mit einer solchen Rahmenvorrichtung.

Derartige Überrollschutzsysteme für Kraftfahrzeuge umfassen insbesondere eine unter anderem die Rahmenvorrichtung zumindest teilweise ausbildende Überrollschutzvorrichtung, die zumindest einen in eine eingefahrene Stellung und in eine ausgefahrene Stellung bzw. Sicherheitsstellung verfahrbaren Überrollbügel aufweist.

Insbesondere werden solche Überrollschutzsysteme in Kraftfahrzeugen wie beispielsweise Cabriolets eingesetzt, um Insassen des Kraftfahrzeuges vor Kopfverletzungen im Falle eines Fahrzeugüberschlags, im Falle eines Fahrzeugcrashs, etc. zu schützen.

Vorzugsweise wird der verfahrbare Überrollbügel dann in die Schutzstellung verfahren, wenn ein Sensor ein entsprechendes Signal ausgibt, wobei das Signal im Falle des Fahrzeugcrashs oder des Fahrzeugüberschlags ausgegeben wird. Insbesondere ist es erforderlich, den Überrollbügel vorzugsweise innerhalb von 200ms ab der Ausgabe des Sensorsignals durch den Sensor in dessen ausgefahrene Stellung zu verfahren bzw. überzuführen.

Aus den dem Stand der Technik angehörenden Druckschriften DE 43 42 401 A1 und DE 195 23 790 A1 sind beispielsweise Überrollschutzvorrichtungen bekannt, bei denen ein verfahrbarer Überrollbügel mit vorgespannten Federelementen vorgesehen ist, die durch einen von einem Crashsensor angesteuerten Auslösemechanismus, wie z. B. einem Elektromagneten oder eine pyrotechnische Patrone, den Überrollbügel zum Schutz des bzw. der Insassen des Fahrzeuges ausfahren.

Für die Feststellung bzw. Verriegelung des ausgefahrenen bzw. in Schutzstellung gebrachten Überrollbügels sind verschiedene Arten von Verriegelungsmechanismen bzw. Verriegelungseinrichtungen bekannt.

Gemäß der DE 197 50 457 A1 wird beispielsweise eine Zahnstange in Längsrichtung des Überrollbügels befestigt, in die eine Verriegelungsklinke eingreift und nach dem Ausfahren des Überrollbügels verhindert, dass der Überrollbügel wieder zurück in dessen eingefahrene Stellung gefahren werden kann.

Eine weitere Möglichkeit zur Verriegelung des Überrollbügels ist die Verwendung eines Kugelschlosses. Die DE 43 42 401 A1 offenbart einen ausfahrbaren Überrollbügel, der stufenlos festgestellt werden kann, indem Verriegelungskugeln in einen sich verjüngenden Abschnitt zwischen das ausgefahrene Bügelrohr des Überrollbügels und dessen Führung, wenn versucht wird, den Überrollbügel wieder einzufahren, gedrückt werden.

Nachteil der bekannten Verriegelungsmechanismen ist, dass bei Verwendung einer Zahnstange mit einer Verriegelungsklinke die Verriegelungsklinke mit einer gewissen Anzahl von Zähnen in die Zahnstange eingreifen muss, um eine sichere Verriegelung des ausgefahrenen Überrollbügels zu gewährleisten. Ist dies nicht der Fall, z. B. bei einer Fehlfunktion in Form eines langsamen Ausfahrens des Überrollbügels, kann die Verriegelung unter Umständen nicht ausreichen und der Überrollbügel bei zu hoher Belastung wieder eingefahren werden.

Der in der DE 43 42 401 A1 vorgeschlagene Verriegelungsmechanismus weist den Nachteil auf, dass über die Verriegelungskugeln die für eine sichere Verriegelung benötigte Klemmkraft nur schlecht und bei weicheren Materialien des Bügelrohres bzw. der Kugeln nicht erreicht wird. Grund hierfür ist, dass die Anlage der Verriegelungskugeln nur punktförmig ist und nicht genug Kraft über die punktförmige Anlage auf den Überrollkörper übertragbar ist.

Ferner ist aus DE 102008032503 A eine Rahmenvorrichtung mit den Merkmalen des Oberbegriffs des Anspruchs 1 bekannt geworden.

Darüber hinaus erfordern die vorstehend beschriebenen dem Stand der Technik angehörenden Überrollschutzsysteme einen großen Bauraum aufgrund deren komplexen Aufbaus. Weiterhin ist der Prüfaufwand zur Sicherstellung deren einwandfreien Betriebs zum Zwecke der Prozesssicherheit aufgrund von deren Vielzahl von Systemkomponenten entsprechend hoch.

Der Erfindung liegt daher die Aufgabe zugrunde, die gattungsgemäßen Rahmenvorrichtungen sowie Überrollschutzsysteme mit derartigen Rahmenvorrichtungen derart weiterzubilden, dass die vorstehend genannten Nachteile des Standes der Technik zumindest teilweise überwunden werden können und insbesondere eine kompakte und funktionsintegrierte Bauweise des Überrollschutzsystems erzielt werden kann.

Diese Aufgabe wird durch die Merkmale des unabhängigen Anspruchs gelöst.

Vorteilhafte Ausgestaltungen und Weiterbildungen der Erfindung ergeben sich aus den abhängigen Ansprüchen.

Die erfindungsgemäße Rahmenvorrichtung für ein Überrollschutzsystem für ein Kraftfahrzeug umfasst ein Profilelement, das zwischen einer ersten Stellung und einer sich von der ersten Stellung unterscheidenden zweiten Stellung verfahrbar gelagert ist. Dabei ist erfindungsgemäß vorgesehen, dass ein Profilquerschnitt des Profilelements derart ausgebildet ist, dass ein oder mehrere Einrichtungen des Überrollschutzsystems, die für das Ausfahren und Arretieren des Profilelements vorgesehen sind in dem Profilelement teilweise oder vollständig aufgenommen und/oder festgelegt werden können. Dadurch, dass die Einrichtungen des Überrollschutzsystems in dem Profilelement aufgenommen und/oder festgelegt werden können, sind die Einrichtungen des Überrollschutzes weitgehend von äußern Einflüssen, beispielsweise von äußeren Umgebungseinflüssen wie Staub, Sand, etc. oder von im Fahrzeug liegenden Teilen wie Kugelschreiber, Koffer etc., geschützt. Darüber hinaus wird auch der für die erfindungsgemäße Rahmenvorrichtung erforderliche Bauraum im Fahrzeug erheblich verringert. Ferner wird durch den Schutz der Einrichtungen des Überrollschutzsystems durch das Profilelement Sicherheitsanforderungen an das Überrollschutzsystem Rechnung getragen. Vorzugsweise handelt es sich bei dem Profilelement um ein Innenprofil, das in einem mit einer Fahrzeugstruktur gekoppelten Vertikalträger beweglich gelagert ist.

Bei der erfindungsgemäßen Rahmenvorrichtung ist das Profilelement derart ausgebildet, dass das Profilelement zumindest einen ersten Innenraum zur Aufnahme und Festlegung einer Einrichtung des Überrollschutzsystems und einen zweiten Innenraum zur Aufnahme und/oder Festlegung einer weiteren Einrichtung des Überrollschutzsystems aufweist. Insbesondere durch Ausbildung von für die entsprechenden funktionalen Einrichtungen vorgesehenen Innenräume in dem Profilelement können gegenseitige Beeinträchtigungen der jeweiligen Einrichtungen unterbunden sowie eine kompakte Rahmenvorrichtung erzielt werden.

Weiterhin ist die erfindungsgemäße Rahmenvorrichtung derart verwirklicht werden, dass der erste Innenraum und der zweite Innenraum in dem Profilelement durch einen Steg voneinander räumlich getrennt oder über einen durch den Steg oder mehrere Stege gebildeten Durchgang miteinander verbunden sind. Vorzugsweise ist in dem Profilelement ein Steg ausgebildet, der gegenüberliegende Wandabschnitte des Profilelements verbindet und dadurch den ersten und zweiten Innenraum teilweise ausbildet bzw. begrenzt. Zum einen kann der Steg zur Festlegung bzw. Befestigung der entsprechenden Einrichtungen des Überrollschutzsystems dienen. Zum anderen vermeidet der Steg insbesondere eine gegenseitige Beeinträchtigung der in dem Profilelement aufgenommenen Einrichtungen des Überrollschutzsystems.

Darüber hinaus kann die erfindungsgemäße Rahmenvorrichtung so umgesetzt werden, dass der Steg oder die Stege im Querschnitt konvex oder konkav oder mit Ein- und/oder Ausbuchtungen ausgebildet sind.

In diesem Zusammenhang wird die erfindungsgemäße Rahmenvorrichtung bevorzugt so ausgestaltet, dass zumindest ein Wandabschnitt des Profilelements im Querschnitt konvex, konkav oder mit Ein- und/oder Ausbuchtungen ausgebildet ist.

Besonders bevorzugt wird die erfindungsgemäße Rahmenvorrichtung dann so realisiert, dass gegenüberliegende Wandabschnitte des Profilelements im Querschnitt konvex, konkav oder mit Ein- und/oder Ausbuchtungen ausgebildet sind. Vorzugsweise werden die in Rede stehenden Wandabschnitte durch Seitenwandabschnitte des Profilelements ausgebildet, die im Querschnitt geradlinig verlaufende Wandabschnitte des Profilelements an Eckabschnitten miteinander verbinden. Dadurch kann das Verformungsverhalten des Profilelements im Falle eines Fahrzeugsüberschlags oder eines Fahrzeugcrashs beeinflusst und zumindest teilweise vorgegeben werden. Beispielsweise lässt sich durch entsprechende Ausgestaltung der Stegs sowie der Wandabschnitte des Profilelements die Beulrichtung der Wandabschnitte und dadurch die Biegungsrichtung des Profilelements vorgeben.

In diesem Zusammenhang wird die erfindungsgemäße Rahmenvorrichtung bevorzugt derart ausgebildet, dass verbleibende gegenüberliegende Wandabschnitte des Profilelements im Querschnitt geradlinig ausgebildet sind.

Ferner kann die erfindungsgemäße Rahmenvorrichtung so weitergebildet werden, dass die zumindest eine Einrichtung des Überrollschutzsystems in dem Profilelement durch Vorsehen des Stegs oder der Stege und/oder einer Verklebung und/oder einer Verschraubung festgelegt wird. Dadurch lässt sich durch einfache Maßnahmen die Befestigung der entsprechenden Einrichtungen des Überrollschutzsystems in dem Profilelement vornehmen. Vorzugsweise werden zwei Einrichtungen, nämlich die Arretiervorrichtung sowie die Kaftbeaufschlagungseinrichtung, in dem Profilelement aufgenommen und durch die Stege oder durch Verschraubungen, Verklebungen festgelegt. Selbstverständlich können auch andere dem Fachmann bekannte Befestigungseinrichtungen zur Festlegung bzw. Befestigung der Einrichtungen des Überrollschutzsystems verwendet werden.

Des Weiteren kann die erfindungsgemäße Rahmenvorrichtung derart verwirklicht werden, dass das Profilelement in einem weiteren, insbesondere mit einer Fahrzeugstruktur gekoppelten, Profilelement verfahrbar gelagert ist. Dabei übernimmt das weitere Profilelement die Lagerung bzw. Führung des die Einrichtungen des Überrollschutzsystems aufnehmenden Profilelements. Vorzugsweise ist das weitere Profilelement der vorgenannte Vertikalträger.

Vorzugsweise wird die erfindungsgemäße Rahmenvorrichtung so ausgestaltet, dass das Profilelement zumindest teilweise einen Überrollschutzbügel des Überrollschutzsystems ausbildet und/oder die Arretiereinrichtung durch eine Verriegelungseinrichtung ausgebildet und/oder die Kraftbeaufschlagungseinrichtung durch eine Druckfedereinrichtung ausgebildet wird.

Das erfindungsgemäße Überrollschutzsystem für ein Fahrzeug umfasst die vorstehend erläuterte erfindungsgemäße Rahmenvorrichtung.

Bevorzugte Ausführungsformen der Erfindung werden nachfolgend anhand der Figuren beispielhaft erläutert.

Es zeigen:
Fig. 1 eine Ansicht eines Ausschnitts eines erfindungsgemäßen Überrollschutzsystems für ein Kraftfahrzeug gemäß einer Ausführungsform der Erfindung,
Fig. 2 eine vergrößerte Ansicht eines Ausschnitts des erfindungsgemäßen Überrollschutzsystems von Fig. 1,
Fig. 3 eine Ansicht des erfindungsgemäßen Überrollschutzsystems von Fig. 1, bei dem sich eine Überrollschutzvorrichtung in einer Schutzstellung befindet.
Fig. 4 eine Ansicht eines Querschnitts eines Vertikalträgers von Figur 1,
Fig. 5 eine Ansicht eines Querschnitts des Innenprofils gemäß einem ersten Ausführungsbeispiel der Erfindung,
Fig. 6 eine Ansicht eines Querschnitt eines Innenprofils gemäß einem zweiten Ausführungsbeispiel der Erfindung,
Fig. 7 eine Ansicht eines Querschnitts eines Innenprofils gemäß einem dritten Ausführungsbeispiel der Erfindung,
Fig. 8 eine Ansicht eines Querschnitts eines Innenprofils gemäß einem vierten Ausführungsbeispiel der Erfindung,
Fig. 9 eine Ansicht des Querschnitts des Innenprofils von Fig. 8, in das eine Verriegelungseinrichtung und eine Druckfedereinrichtung eingesetzt sind,
Fig. 10 eine Seitenansicht der Verriegelungseinrichtung von Fig. 9,
Fig. 11 eine Vorderansicht der Verriegelungsbolzen in den entsprechenden Bohrungen,
Fig. 12 eine Schnittansicht der Verriegelungsbolzen in den entsprechenden Bohrungen,
Fig. 13 eine Schnittansicht in Verriegelungsbolzenlängsrichtung des linken Verriegelungsbolzens von Figur 10,
Fig. 14 eine Schnittansicht in Verriegelungsbolzenlängsrichtung des rechten Verriegelungsbolzens von Figur 10,
Fig. 15 eine Draufsicht der Verriegelungsbolzen von Figur 10,
Fig. 16 eine Vorderansicht des Vertikalträgers mit entsprechenden Bohrungen,
Fig. 17 eine Hinteransicht des Vertikalträgers mit entsprechenden Bohrungen,
Fig. 18 eine Draufsicht des Vertikalträgers und des Innenprofils mit daran befestigtem oberem Deckel,
Fig. 19 eine Querschnittsansicht des Vertikalträgers und des Innenprofils mit daran befestigtem oberem Deckel entlang dem Schnitt A-A von Fig. 18,
Fig. 20 eine weitere Querschnittsansicht des Vertikalträgers und des Innenprofils mit daran befestigtem oberem Deckel von Fig. 18,
Fig. 21 eine weitere Querschnittsansicht des Vertikalträgers und des Innenprofils mit daran befestigtem oberem Deckel und einer Schutzkappe von Fig. 18,
Fig. 22 eine Seitenansicht des Vertikalträgers und des Innenprofils mit daran befestigtem oberem Deckel und auf dem oberen Deckel angebrachter Schutzkappe von Fig. 18,
Fig. 23 eine Seitenansicht eines unteren Abschnitts des Vertikalprofils,
Fig. 24 eine Draufsicht des Vertikalprofils von Fig. 23,
Fig. 25 eine Schnittansicht des Vertikalprofils von Fig. 24 entlang dem Schnitt A-A,
Fig. 26 eine weitere Schnittansicht des Vertikalprofils von Fig. 24 entlang dem Schnitt B-B,
Fig. 27 eine Schnittansicht eines unteren Endabschnitts des Vertikalträgers, bei der Aktor mit dem Aktorverriegelungsbolzen in Eingriff steht, und
Fig. 28 eine weitere Schnittansicht des unteren Abschnitts des Vertikalträgers zeigt, bei der der Aktor weggelassen ist.

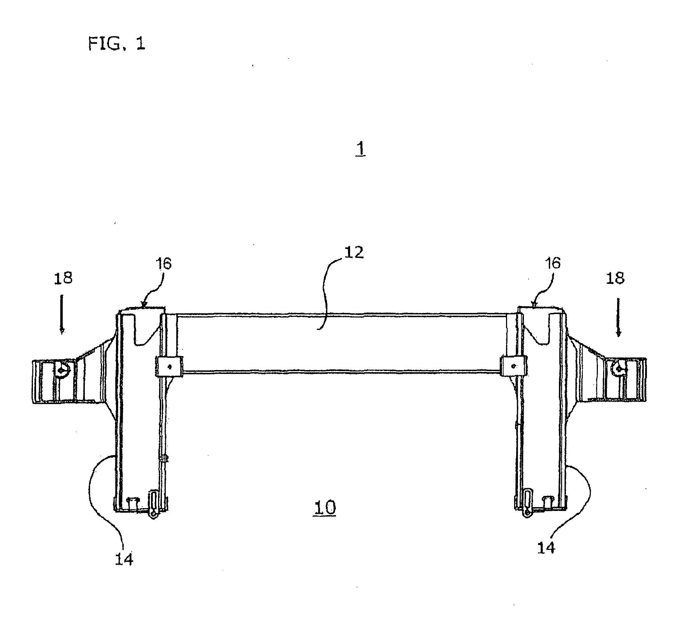

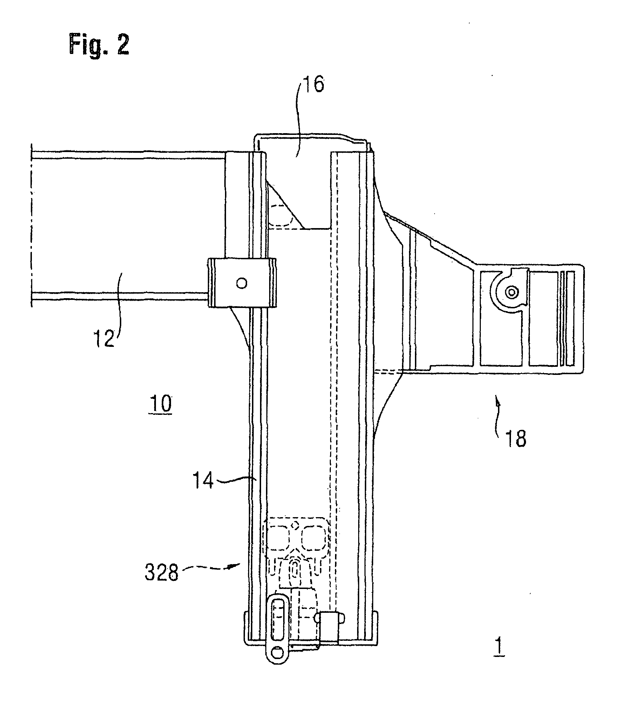

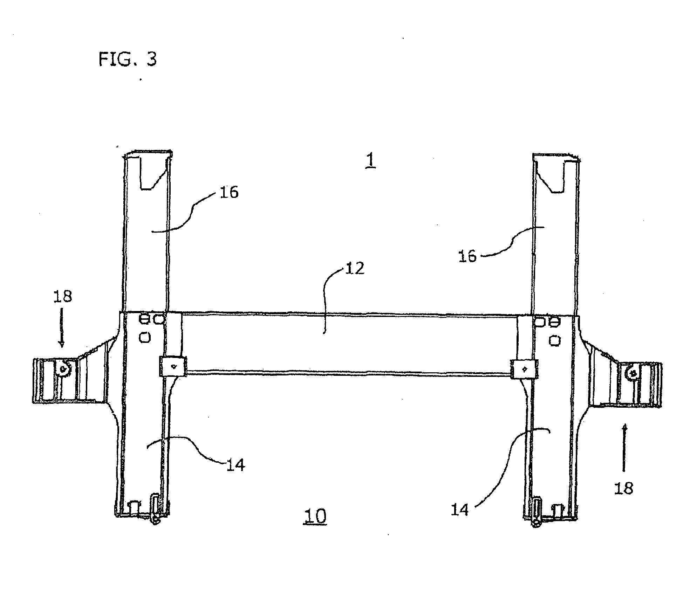

Fig. 1 zeigt eine Ansicht eines Ausschnitts eines erfindungsgemäßen Überrollschutzsystems 1 für ein Kraftfahrzeug, insbesondere für ein Cabriolet, gemäß einer Ausführungsform der Erfindung. Weiterhin zeigt Fig. 2 eine vergrößerte Ansicht eines Ausschnitts des erfindungsgemäßen Überrollschutzsystems 1 von Fig. 1. Darüber hinaus zeigt Fig. 3 eine Ansicht des erfindungsgemäßen Überrollschutzsystems 1 von Fig. 1, bei dem sich eine nachstehend näher erläuterte Überrollschutzvorrichtung in einer Schutzstellung bzw. Sicherheitsstellung befindet.

Wie aus den Fig. 1 bis 3 ersichtlich ist, umfasst das Überrollschutzsystem 1 zumindest eine eine Überrollschutzvorrichtung zumindest teilweise ausbildende Rahmenvorrichtung 10, die vorzugsweise zwischen einem vorderen Bereich eines Kofferraums des Kraftfahrzeugs und einem hinteren Bereich einer Sitzbankreihe gesehen in Fahrzeuglängsrichtung des Cabriolets angeordnet ist.

Die Rahmenvorrichtung 10 fungiert insbesondere als eine Kraft aufnehmende Tragstruktur und weist in dem in den Figuren 1 bis 3 dargestellten Fall zwei als Hohlprofil bzw. als Rohr ausgebildete Vertikalträger 14 und einen die beiden Vertikalträger 14 koppelnden bzw. verbindenden als Hohlprofil bzw. als Rohr ausgebildeten Querträger 12 auf.

Wie in den Figuren 1 bis 3 dargestellt ist, ist der Querträger 12 mit dessen beiden Enden bzw. Endabschnitten mit entsprechenden Verbindungsabschnitten der jeweiligen Vertikalträger 14 gekoppelt. Weiterhin ist aus den Fig. 1 bis 3 ersichtlich, dass die Vertikalträger 14 jeweils mit einer eine Koppelungseinrichtung ausbildenden Anbindung 18 vorgesehen sind, die wiederum mit einer nicht dargestellten Fahrzeugkarosserie bzw. einer Kraft aufnehmenden Rahmenstruktur bzw. Fahrzeugkarosseriestruktur gekoppelt ist und etwa in der Höhe der Verbindungsabschnitte der Vertikalträger 14 mit dem Querträger 12 angeordnet ist.

Der Querträger 12 ist mit einer bestimmten Torsions- und Biegesteifigkeit, beispielsweise durch entsprechende Ausgestaltung dessen Querschnitts, ausgelegt, so dass der Querträger 12 im Fahrbetrieb des Kraftfahrzeugs durch dessen Torsions- und Biegesteifigkeit zur Gesamtsteifigkeit des Kraftfahrzeugs beiträgt. Im Crashfall des Kraftfahrzeugs bzw. bei einem Fahrzeugüberschlag übernimmt der Querträger 12 unter anderem die Aufgabe, die durch ihn aufgenommenen Kräfte bzw. Lasten über die Vertikalträger 14 und die jeweiligen Anbindungen 18 in die Fahrzeugkarosseriestruktur einzuleiten bzw. zu übertragen.

Vorzugsweise ist der Querträger 12 in diesem Ausführungsbeispiel als ein Strangpressprofil ausgeführt, das aus einem Metall wie Aluminium oder einer Aluminiumlegierung ausgebildet wird. Der Querschnitt des Querträgers 12 kann beliebig ausgestaltet sein, solange der Querträger 12 die entsprechenden Biege- und Torsionsmomente aufnehmen kann. Die Länge des Querträgers 12 ist ebenso beliebig und entsprechend der Fahrzeugbreite des das Überrollschutzsystem 1 umfassenden Fahrzeugs anpassbar.

Ebenso wie der Querträger 12 sind auch die Vertikalträger 14 mit einer bestimmten Torsions- und Biegesteifigkeit ausgelegt, so dass die Vertikalträger 14 zusammen mit dem Querträger 12 zur Gesamtsteifigkeit des Kraftfahrzeugs beitragen. Auch in diesem Fall sind die Vertikalträger 14 hinsichtlich deren Länge in Abhängigkeit des das Überrollschutzsystem 1 aufweisenden Fahrzeugs anpassbar. Darüber hinaus sind die Vertikalträger 14 in diesem Ausführungsbeispiel vorzugsweise als Hohlprofilteile bzw. Rohre ausgeführt, so dass die Vertikalträger 14 als eine Führung bzw. Führungseinrichtung für in den Vertikalträgern 14 beweglich gelagerte und einen Überrollbügel zumindest teilweise ausbildende Innenprofile 16 dienen. Insbesondere sind die in den Vertikalträgern 14 geführten Innenprofile 16 in den Figuren 1 und 2 in ihrer eingefahrenen Stellung angeordnet, während die gleichen Innenprofile 16 in Figur 3 in ihrer ausgefahrenen Stellung bzw, Sicherheitsstellung angeordnet sind. Dementsprechend lassen sich die in den entsprechenden Vertikalträgern 14 beweglich gelagerten Innenprofile 16 in eine eingefahrene Stellung, bei der das entsprechende Innenprofil 16 vollständig oder größtenteils in dem entsprechenden Vertikalträger 14 aufgenommen ist, und in eine ausgefahrene Stellung, d.h. die Schutzstellung bzw. Sicherheitsstellung, bei der das entsprechende Innenprofil 16 lediglich mit einem unteren Endabschnitt in dem entsprechenden Vertikalträger 14 aufgenommen ist und größtenteils freiliegend ist, relativ zu den entsprechenden Vertikalträgern 14 bewegen. Wie nachstehend noch näher erläutert ist, dienen die Innenprofile 16 zur Kraftübertragung bzw. Lastweiterleitung der Belastungen im Crashfall oder bei einem Fahrzeugüberschlag zu den entsprechenden Vertikalträgern 14 und dadurch über die an den Vertikalträgern 14 vorgesehenen Anbindungen 18 in Fahrzeugkarosseriestruktur.

Wie nachstehend ausführlich erläutert ist, dienen die Vertikalträger 14 insbesondere als Schutz des Innenprofils 16 sowie weiterer bestimmter kinematischer Bauteile, beispielsweise eines ein Betätigungsglied bzw. eine Auslösereinrichtung ausbildenden Aktors 82, einer Druckfedereinrichtung 330 mit einer oder mehreren Druckfedern etc. Vorzugsweise sind die Vertikalträger 14 mit nachstehend näher erläuterten Verriegelungsschlitzen bzw. Verriegelungsdurchbrüchen, insbesondere mit Energie absorbierender Ausgestaltung, vorgesehen.

Wie insbesondere aus Fig. 2 ersichtlich ist, umfasst die Rahmenvorrichtung 10 die mit den entsprechenden Vertikalträgern 14 gekoppelte und eine Koppelungseinrichtung ausbildende Anbindung 18, die jeweils seitlich mit dem entsprechenden Vertikalträger 14 gekoppelt ist und vorzugsweise als Gussteil, aber bei einfachen Geometrien der Rahmenvorrichtung auch als Strangpressprofil, ausgeführt sein kann. Die die Koppelungseinrichtung ausbildende Anbindung 18 ist mit einer nicht dargestellten Fahrzeugstruktur bzw. Fahrzeugkarosseriestruktur gekoppelt und dient damit zur Einleitung bzw. Übertragung der durch die Innenprofile 16 und die Vertikalträger 14 aufgenommenen Kräfte in die Fahrzeugstruktur bzw. Fahrzeugkarosserie. Darüber hinaus kann die die Koppelungseinrichtung ausbildende Anbindung 18 derart ausgestaltet sein, dass weitere Anbindungsmöglichkeiten neben der Anbindung zur Kraftübertragung in die Fahrzeugkarosseriestruktur zur Verfügung gestellt werden. Beispielsweise kann die Anbindung 18 mit einer Integrationsmöglichkeit für Sicherheitsgurtumlenkpunkten und/oder Cabrioverdecklagerungspunkten ausgestaltet sein.

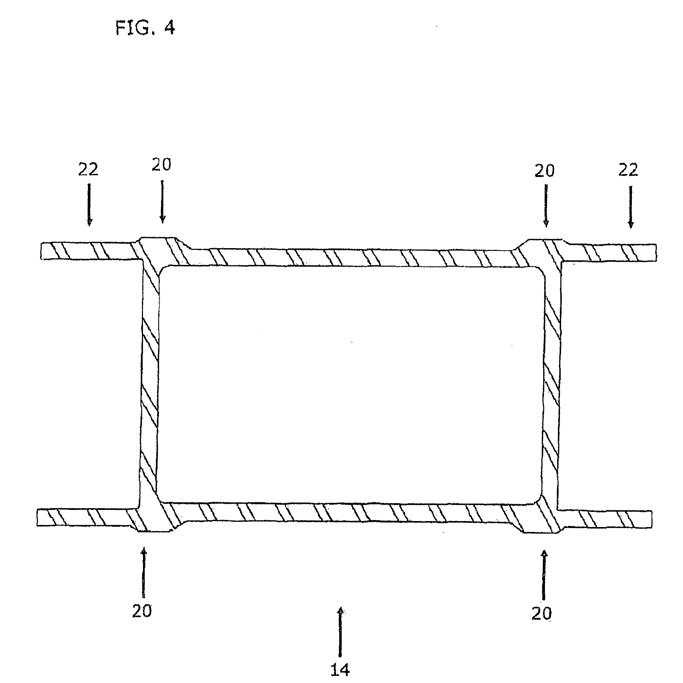

Die Kopplung bzw. Befestigung der die Koppelungseinrichtung ausbildenden Anbindung 18 mit dem entsprechenden Vertikalträger 14 kann auf unterschiedliche Weise erfolgen. Vorzugsweise sind die Vertikalträger 14 durch entsprechende Ausbildung von deren Profilquerschnitt ausgestaltet, um eine mechanische Kopplung mit der Anbindung 18 zu ermöglichen, wie beispielsweise in Fig. 4 gezeigt ist.

Fig. 4 zeigt eine Ansicht eines Querschnitts eines Vertikalträgers 14 der Figuren 1 bis 3. Wie aus Fig. 4 ersichtlich ist, weist der Vertikalträger 14 einen im Wesentlichen rechteckförmigen Querschnitt auf, dessen Eckebereiche bzw. Eckabschnitte 20 gegenüber den verbleibenden Wandbereichen bzw. Wandabschnitten des rechteckförmigen Querschnitts aufgedickt sind, d.h. eine größere Dicke als die der verbleibenden Wandabschnitte aufweisen. Darüber hinaus ist der Querschnitt des Vertikalträgers 14 mit Flanschabschnitten 22 ausgebildet, die jeweils mit entsprechenden Eckabschnitten 20 verbunden sind und sich in Breitenrichtung des Profilquerschnitts, d. h. in horizontaler Richtung in Fig. 4, erstrecken. Demzufolge ähnelt der Querschnitt des Vertikalträgers 14 dem Querschnitt zweier aufeinander gestellter H-Profile (quasi ein Doppel-H-Profil). Die Aufdickung der Eckabschnitte 20 sowie die jeweilige Ausgestaltung der Wandabschnitte des Vertikalträgers 14 führt dabei zu einer gewichtsoptimierten Ausgestaltung des Vertikalträgers 14. Über die Flanschabschnitte 22 des Vertikalträgers 14 werden somit Anbindungsmöglichkeiten für die die Koppelungseinrichtung ausbildende Anbindung 18 und vorzugsweise auch für den Querträger 12 geschaffen.

Wie vorstehend erwähnt ist, sind die entsprechenden Innenprofile 16 relativ beweglich in den diese führenden Vertikalträgern 14 gelagert. Insbesondere befinden sich die Innenprofile 16 beispielsweise im Falle eines Überschlags des Kraftfahrzeugs in einer ausgefahrenen Stellung bzw. Schutzstellung/Sicherheitsstellung. In der Sicherheitsstellung werden die Innenprofile 16 durch eine untenstehend näher erläuterte Arretiereinrichtung bzw. Verriegelungseinrichtung 328 festgestellt bzw. verriegelt, so dass die Kraftübertragung von dem jeweiligen Innenprofil 16 über die Verriegelungseinrichtung 328 in den jeweiligen Vertikalträger 14 erfolgt.

Damit die einen Überrollbügels zumindest teilweise ausbildenden Innenprofile 16 eine gewisse Schutzfunktion erfüllen können, ist das Innenprofil 16 zum einen zur Aufnahme entsprechender Biegemomente ausgelegt bzw. dessen Profilquerschnitt ist entsprechend dimensioniert. Dies wird vorzugsweise durch eine bestimmte Wandstärkenverteilung des Innenprofils 16 sowie eine gewisse Wandabschnittausgestaltung des Innenprofils 16 erzielt. Weiterhin sind die Innenprofile 16 derart ausgestaltet, dass sie bei Belastungen in Kraftfahrzeugslängsrichtung in ihrem Kraftaufnahmeniveau limitiert sind und ein Biegen ohne Bruch des Innenprofils 16 bis annähernd zur Horizontalen im Hinblick auf die Längsachse des Kraftfahrzeugs, d.h. parallel zur Längsachse, möglich ist. Dadurch wird bei einer auf das Innenprofil 16 wirkenden Überlast ein Herausreißen der Vertikalträger 14 von den die Koppelungseinrichtungen ausbildenden Anbindungen 18 vermieden, wodurch eine mögliche Gefährdung eines Fahrzeugsinsassen verhindert werden kann. Zu diesem Zweck bzw. um die erforderlichen sicherheitsrelevanten Anforderungen zu erfüllen, wird das Innenprofil 16 vorzugsweise mit konkav oder konvex ausgebildeten Wandabschnitten oder mit Aus- und/oder Einbuchtungen aufweisenden Wandabschnitten ausgebildet. Anhand dieser Ausbildungen bzw. durch die Vorkrümmung der entsprechenden Wandabschnitte des Innenprofils ist die Versagenskraft bzw. das Versagensmoment leichter dimensionierbar, da im Vergleich zu geradlinig verlaufenden Wandabschnitten des Innenprofils die Beulrichtung bzw. die Verformungsrichtung der Wandabschnitte des Innenprofils 16 und damit die Biegerichtung des Innenprofils 16 vorgegeben werden kann.

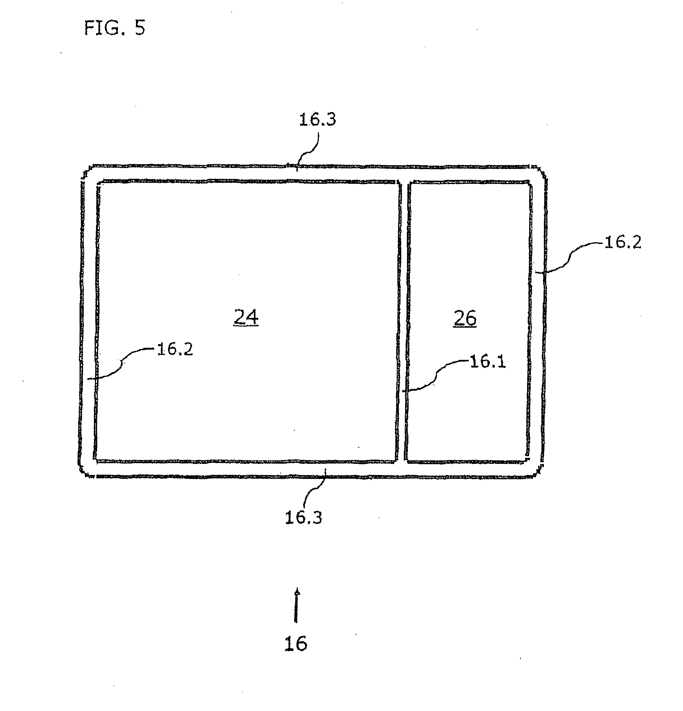

Fig. 5 zeigt eine Ansicht eines Querschnitts des Innenprofils 16 gemäß einem ersten Ausführungsbeispiel der Erfindung. Wie aus Fig. 5 ersichtlich ist, weist das Innenprofil 16 einen im Wesentlichen rechteckförmigen Querschnitt auf, der durch gegenüberliegende Seitenwandabschnitte 16.2 und diese Seitenwandabschnitte 16.2 an Eckabschnitten verbindende gegenüberliegende Wandabschnitte 16.3 ausgebildet wird. Zusätzlich ist ein Steg 16.1 (bzw. eine Zwischenwand) zwischen den Seitenwandabschnitten 16.2 und vorzugsweise parallel zu diesen derart ausgebildet, dass in dem Innenprofil 16 ein erster Innenraum 24 und ein zweiter Innenraum 26 durch den Steg 16.1 anhand der Kopplung des Stegs 16.1 mit den gegenüberliegenden Wandabschnitten 16.3 ausgebildet werden.

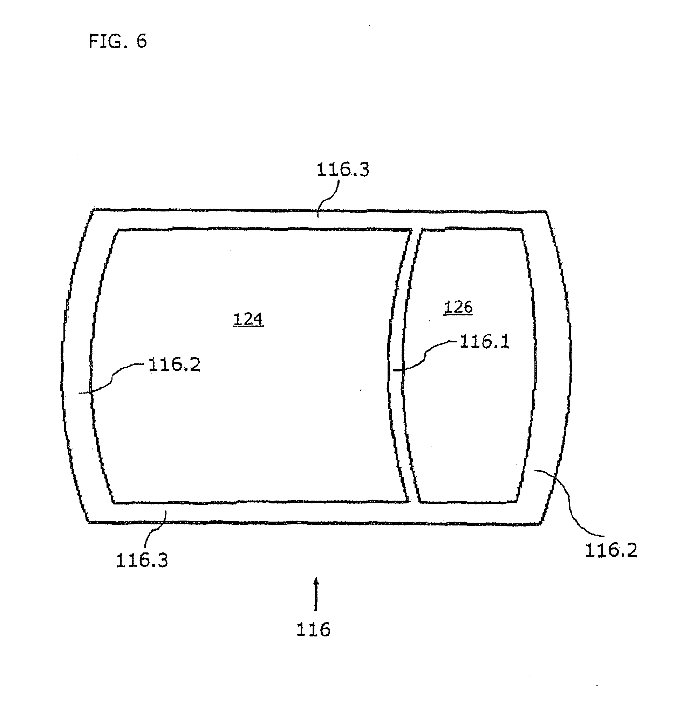

Fig. 6 zeigt eine Ansicht eines Querschnitts eines Innenprofils 116 gemäß einem zweiten Ausführungsbeispiel der Erfindung. Wie aus Fig. 6 ersichtlich ist, weist das Innenprofil 116 einen im Wesentlichen rechteckförmigen Querschnitt auf, wobei in diesem Ausführungsbeispiel die Seitenwandabschnitte 116.2 nach außen gekrümmt, d. h. konvex ausgebildet sind, und der Steg 116.1 in Richtung des den ersten Innenraum 124 zumindest teilweise ausbildenden (linken in Figur 6) Seitenwandabschnitts 116.2 gekrümmt ist. Auch in diesem Fall wird durch die Verbindung des Stegs 116.1 mit den jeweiligen geradlinig verlaufenden und gegenüberliegenden Wandabschnitten 116.3 ein erster Innenraum 124 und ein zweiter Innenraum 126 in dem Innenprofil 116 ausgebildet.

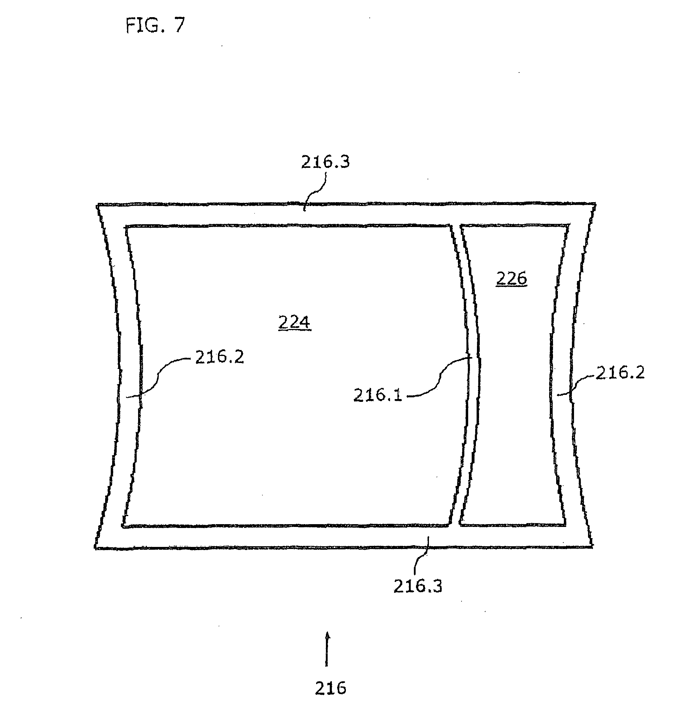

Fig. 7 zeigt eine Ansicht eines Querschnitts eines Innenprofils 216 gemäß einem dritten Ausführungsbeispiel der Erfindung. Wie aus Fig. 7 ersichtlich ist, weist das Innenprofil 216 in diesem Ausführungsbeispiel einen im Wesentlichen rechteckförmigen Querschnitt auf, wobei das Innenprofil 216 nach innen gekrümmte Seitenwandabschnitte 216.2 und geradlinig verlaufende Wandabschnitte 216.3 umfasst. Dabei ist der Steg 216.1 in Richtung des den zweiten Innenraum 226 zumindest teilweise ausbildenden (in Figur 7 rechten) Seitenwandabschnitts 216.2 gekrümmt. Dementsprechend sind die Seitenwandabschnitte 216.2 in diesem Ausführungsbeispiel konkav ausgebildet. Auch in diesem Fall werden durch die Kopplung des Stegs 216.1 mit den entsprechenden gegenüberliegenden Wandabschnitten 216.3 der erste Innenraum 224 und der zweite Innenraum 226 in dem Innenprofil 216 ausgebildet.

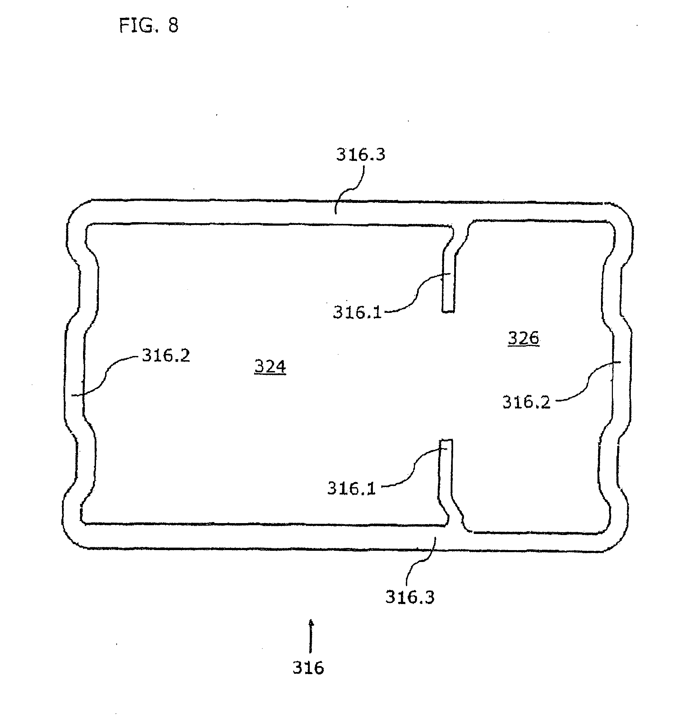

Fig. 8 zeigt eine Ansicht eines Querschnitts eines Innenprofils 316 gemäß einem vierten Ausführungsbeispiel der Erfindung. Wie insbesondere aus Fig. 8 ersichtlich ist, weist das Innenprofil 316 einen im Wesentlichen rechteckförmigen Querschnitt auf, wobei die Seitenwandabschnitte 316.2 mit entsprechenden Einbuchtungen in Richtung Profilinneres und einer zwischen den Einbuchtungen ausgebildeten Ausbuchtung in Richtung Profiläußeres vorgesehen sind. Hingegen verlaufen die gegenüberliegenden Wandabschnitte 316.3 geradlinig. Darüber hinaus sind in diesem Fall zwei gegenüberliegende Stege 316.1 an den geradlinig verlaufenden gegenüberliegenden Wandabschnitten 316.3 derart vorgesehen, dass die Stege 316.1 in einem gewissen vorbestimmten Abstand voneinander beabstandet sind. Somit werden in diesem Ausführungsbeispiel ein erster Innenraum 324 und ein zweiter Innenraum 326 in dem Innenprofil 316 ausgebildet, wobei der erste Raum 324 und der zweite Raum 326 über den durch die beiden Stege 316.1 gebildeten Durchgang miteinander verbunden sind.

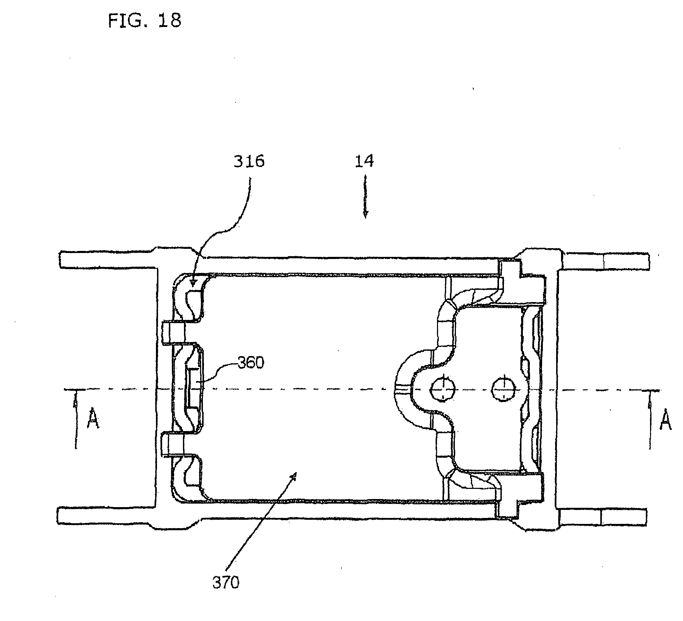

Neben der Vorgabe der Beulrichtung des Innenprofils im Falle einer Überlast im Crashfall kann anhand der vorstehend beschriebenen Ausgestaltung der entsprechenden Seitenwandabschnitte des jeweiligen Innenprofils, wie in den Fig. 6 bis 8 dargestellt ist, ein Abscheren einer nachstehend näher beschriebenen Schutzkappeneinrastung einer Schutzkappe 370, wie nachstehend unter Bezugnahme auf die Figuren 18 bis 26 beschrieben ist, vermieden werden, da anhand dieser Ausgestaltung des Innenprofils 316 zumindest ein Zwischenraum zwischen Wandabschnitten des Innenprofils 316 und Vertikalprofils 14 zur Verfügung gestellt wird.

Zusätzlich zu der entsprechenden Ausgestaltung der vorstehend näher erläuterten Innenprofile 16, 116, 216, 316 zur Aufnahme entsprechender Biegemomente sowie zur Vorgabe der Beulrichtung ist das Innenprofile zum anderen so ausgebildet, dass es zumindest eine nachstehend näher erläuterte Verriegelungseinrichtung 328 sowie eine nachstehend noch näher beschriebene Druckfedereinrichtung 330 aufnimmt. Nachstehend wird die Aufnahme der vorstehend erwähnten Einrichtungen 328 und 330 unter Bezugnahme auf das Innenprofil 316 von Figur 8 näher beschrieben.

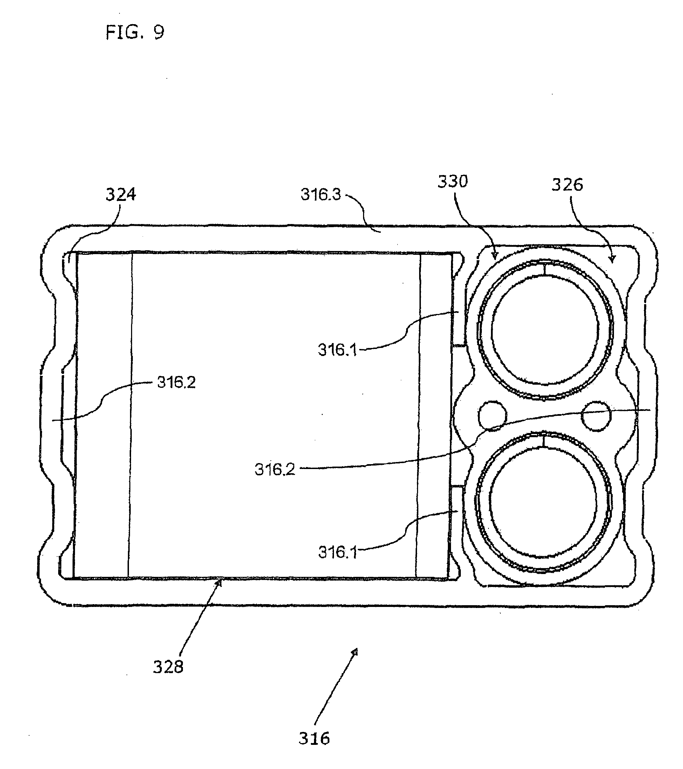

Fig. 9 zeigt eine Ansicht des Querschnitts des Innenprofils 316 von Fig. 8, in das die vorstehend erwähnte Verriegelungseinrichtung bzw. Arretiervorrichtung 328 und die vorstehend erwähnte eine Kraftbeaufschlagungseinrichtung ausbildende Druckfedereinrichtung 330 eingesetzt sind. Dabei ist die Verriegelungseinrichtung 328 in den ersten Innenraum 324 und die Druckfedereinrichtung 330 in den zweiten Innenraum 326 des Innenprofils 316 eingesetzt. Durch diese Anordnung der Verriegelungseinrichtung 328 und der Druckfedereinrichtung 330 wird ermöglicht, eine äußerst Platz sparende Vorrichtung zur Verfügung zu stellen.

Um eine möglichst große maximale Ausfahrhöhe des Innenprofils 316 in die Sicherheitsstellung zu erzielen, ist die Position der Verriegelungseinrichtung 328 vorzugsweise möglichst nahe des unteren Endabschnitts des Innenprofils 316 angeordnet, wie beispielsweise aus Figur 2 ersichtlich ist. Der Antrieb bzw. das Ausfahren des Innenprofils 316 erfolgt anhand der nachstehend noch näher erläuterten Druckfedereinrichtung 330, die sich einerseits im Bereich des Kraftfahrzeugsbodens, beispielsweise an einem unteren Endabschnitt des entsprechenden Vertikalträgers 14 abstützt, vorzugsweise an einem nachfolgend näher beschriebenen unteren Deckel, und sich andererseits am oberen Ende des Innenprofils 316, vorzugsweise an einem nachstehend näher erläuterten oberen Deckel des Innenprofils 316, abstützt. Dementsprechend erstreckt sich die vorgespannte Druckfedereinrichtung 330 über vorzugsweise die gesamte Länge des Innenprofils 316, wenn sich das Innenprofil 316 in dessen eingefahrener Stellung befindet und folglich von dem Vertikalträger 14 größtenteils oder vollständig aufgenommen wird. Eine solche Federlänge der Druckfedern der Druckfedereinrichtung 330 ist in diesem Fall bevorzugt, um den entsprechenden Federweg zum Ausfahren des Innenprofils 316 in die Sicherheitsstellung zu erzielen.

Wie aus Figur 9 weiterhin ersichtlich ist, sind die Verriegelungseinrichtung 328 und die Druckfedereinrichtung 330 erfindungsgemäß in den Innenräumen 324 und 326 des Innenprofils 316 separat angeordnet, wodurch eine gegenseitige Beeinträchtigung beider Einrichtungen 328 und 330 vermieden wird.

Zu diesem Zweck umfasst das Innenprofil 316 die vorstehend beschriebenen Stege 316.1, welche das Innere des Innenprofils 316 in den ersten und zweiten Innenraum 324, 326 unterteilen, wobei durch die Ausbildung des ersten Innenraums 324 und des zweiten Innenraums 326 eine Positionierung und Festlegung bzw. Befestigung der Verriegelungseinrichtung 324 sowie der Druckfedereinrichtung 330 ermöglicht wird. Zur Festlegung bzw. Befestigung der Verriegelungseinrichtung 328 und der Druckfedereinrichtung 330 können unter anderem die vorstehend erläuterten Stege 316.1 vorgesehen sein, wobei alternativ oder zusätzlich Verschraubungen oder Verklebungen der Verriegelungseinrichtung 328 und der Druckfedereinrichtung 330 vorgesehen sein können. Beispielsweise kann die Druckfedereinrichtung 330 durch seitliches Verschraubungen oder Verkleben einer nachstehend näher erläuterten Federführungseinrichtung der Druckfedereinrichtung 330 erzielt werden.

In diesem Zusammenhang wird angemerkt, dass das Innenprofil 316 auch auf unterschiedliche Weise ausgestaltet werden kann, solange das Innenprofil 316 in diesem Fall die Verriegelungseinrichtung 328 und die Druckfedereinrichtung 330 aufnimmt.

Beispielsweise kann das Innenprofil in einer alternativen Ausgestaltung so ausgebildet werden, dass die Verriegelungseinrichtung gesehen im Querschnitt in der Mitte des Innenprofils angeordnet ist und zwei Druckfedereinrichtungen an entsprechenden Seiten der Verriegelungseinrichtung angeordnet sind. In diesem Fall bildet das Innenprofil vorzugsweise drei Innenräume aus, wobei ein die Verriegelungseinrichtung aufnehmender mittlerer Innenraum zwischen zwei die Druckfedereinrichtungen aufnehmenden seitlichen Innenräumen ausgebildet ist.

Ebenso ist denkbar, dass zwei Verriegelungseinrichtungen mit einer dazwischen angeordneten Druckfedereinrichtung in dem Innenprofil angeordnet sind.

Besonders vorteilhaft an der Ausgestaltung des Innenprofils 316 von Figur 9 ist insbesondere, dass der ein Betätigungsglied bzw. eine Auslöseeinrichtung ausbildende und nachstehend näher beschriebene Aktor 82 in diesem Fall unterhalb der Verriegelungseinrichtung 328 in die Verriegelungseinrichtung 328 einhakend angeordnet ist und dadurch anhand des Vertikalprofils 14 und des Innenprofils 316 von äußeren Umgebungseinflüssen geschützt ist. Selbstverständlich kann der Aktor 82 im Ermessen des Fachmanns auch an anderer Stelle angeordnet werden.

Anhand der räumlichen Trennung der Verriegelungseinrichtung 328 und der Druckfedereinrichtung 330 in dem Innenprofil 316 wird darüber hinaus eine unabhängige Gestaltung des Aktors 82 in dem Überrollschutzsystem erzielt. Weiterhin wird durch das vorstehend beschriebene Innenprofil 316 auch eine weitgehend klapperfreie Anordnung der Druckfedereinrichtung 330, insbesondere der Druckfederführung der Druckfedereinrichtung 330, erzielt. Ebenso kann anhand der Ausgestaltung des Innenprofils 316 die Verriegelungseinrichtung 328 in dem Innenprofil 316 auf sehr platzsparende Weise montiert werden.

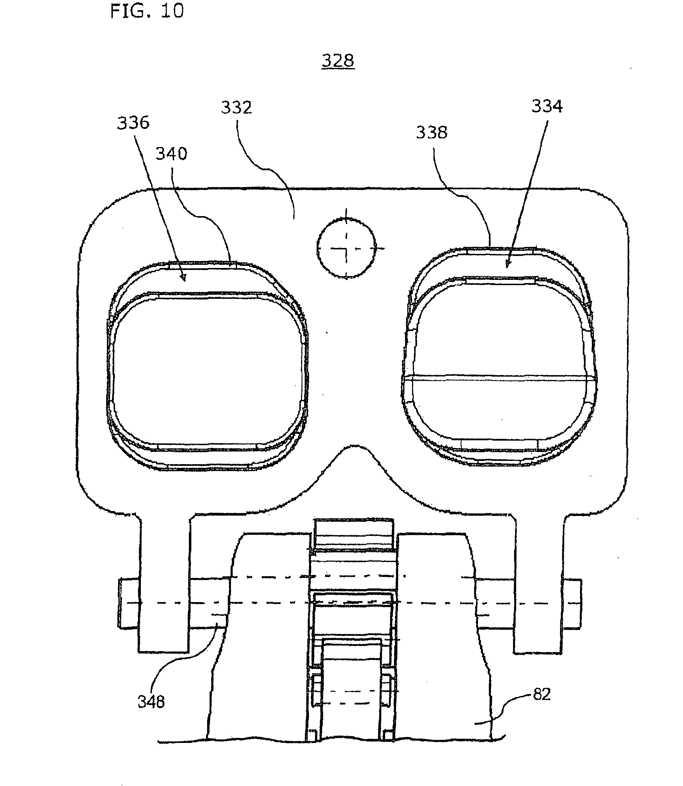

Fig. 10 zeigt eine Seitenansicht der eine Arretiereinrichtung bzw. Feststelleinrichtung ausbildenden Verriegelungseinrichtung 328 von Fig. 9. Die Verriegelungseinrichtung 328 ist an einem unteren Endabschnitt des Innenprofils 316 angeordnet und dort mit dem Innenprofil 316 fest verbunden, wie es insbesondere in Figur 2 dargestellt ist. Wie aus Fig. 10 ersichtlich ist, umfasst die Verriegelungseinrichtung 328 ein Gehäuse 332, in dem in diesem Ausführungsbeispiel zwei nachstehend näher beschriebene Verriegelungsbolzen 334 und 336 in entsprechenden in dem Gehäuse 332 vorgesehenen Bohrungen 338 und 340 in deren Längsrichtung beweglich, aber verdrehsicher aufgenommen sind. Darüber hinaus ist das Gehäuse 332 mit einem Aktorverriegelungsbolzen 384 gekoppelt, der mit dem nachstehend näher erläuterten Aktor 82 in Eingriff bringbar ist bzw. in den der nachstehend näher erlauterte Aktor 82 eingehakt werden kann, wenn sich das Innenprofil in dessen eingefahrener Stellung befindet. Das Gehäuse 332 der Verriegelungseinrichtung 328 ist, wie vorstehend erwähnt, fest mit dem Innenprofil 316 verbunden und ist anhand der Verriegelungsbolzen 334, 336, die durch entsprechende Bohrungen des Innenprofils 316 ragen, formschlüssig mit dem Innenprofils 316 verbunden.

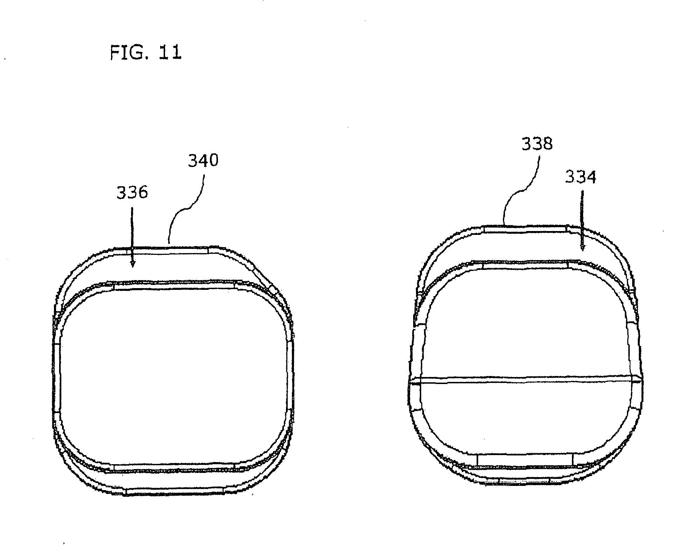

Die Verriegelungsbolzen 334, 336 sind, wie vorstehend erwähnt ist, in entsprechende Bohrungen 338, 340 des Gehäuses 332 der Verriegelungseinrichtung 328 verdrehsicher (aufgrund der Ausgestaltung der Bohrungen 338, 340 mit entsprechender Verriegelungsbolzenform) eingesetzt und ragen durch entsprechende Öffnungen bzw. Bohrungen im Innenprofil 316 derart hindurch, dass die Verriegelungsbolzen bei der eingefahrenen Stellung des Innenprofils 316 an der Innenwand des Vertikalträgers 314 anstehen und bei Erreichen von Zwischenstellungen des Innenprofils bis hin zur Schutzstellung in entsprechende an den Vertikalträgern 314 vorgesehene Bohrungen bzw. Durchbrüche eingreifen bzw. einrasten, worauf nachstehend noch näher im Zusammenhang mit der ausführlichen Beschreibung der Figuren 11 bis 17 eingegangen wird.

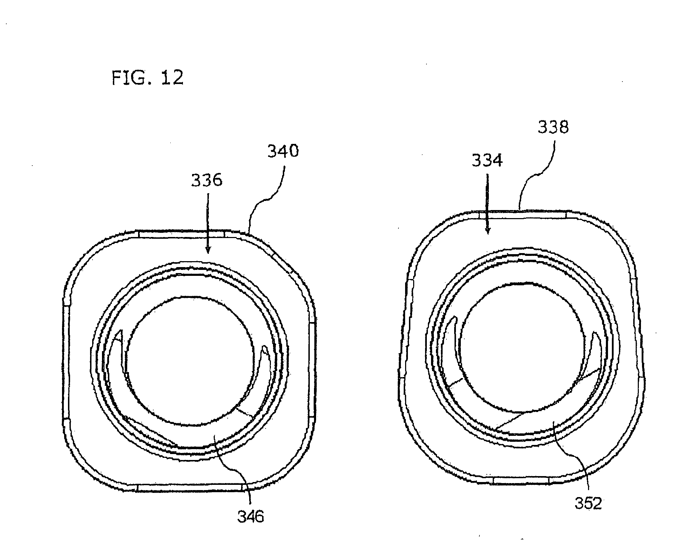

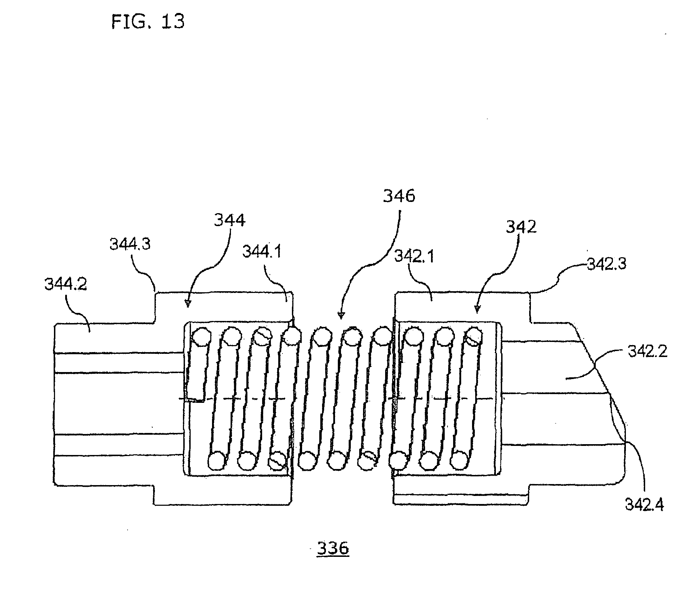

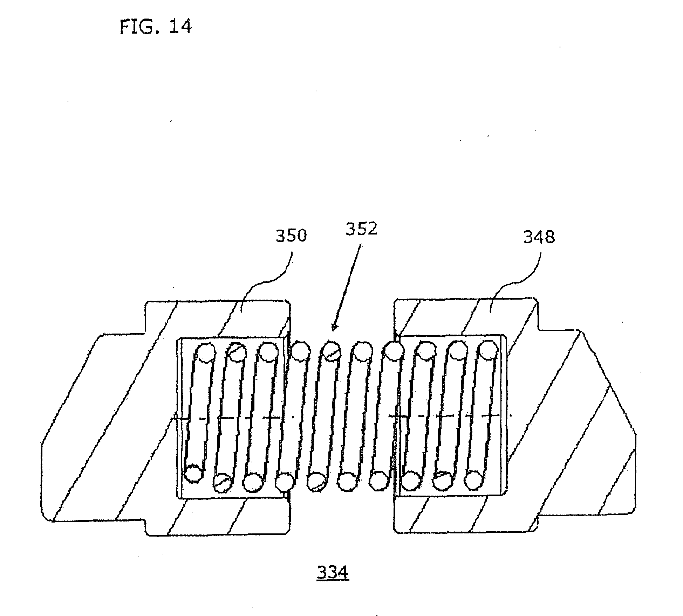

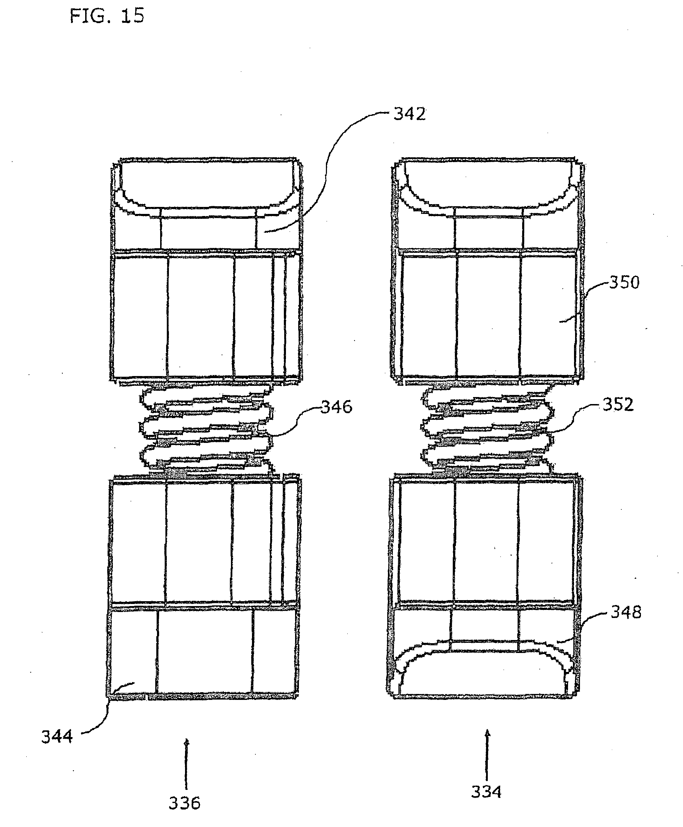

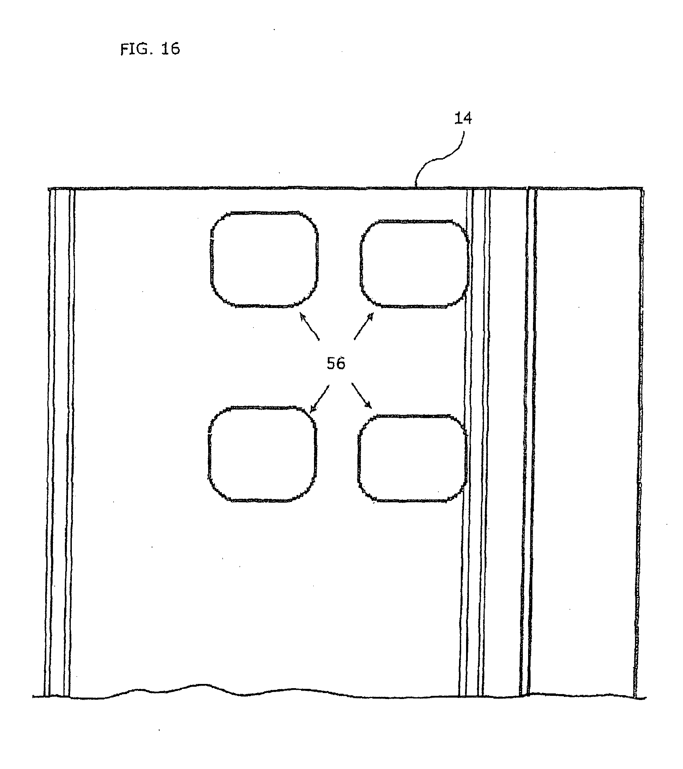

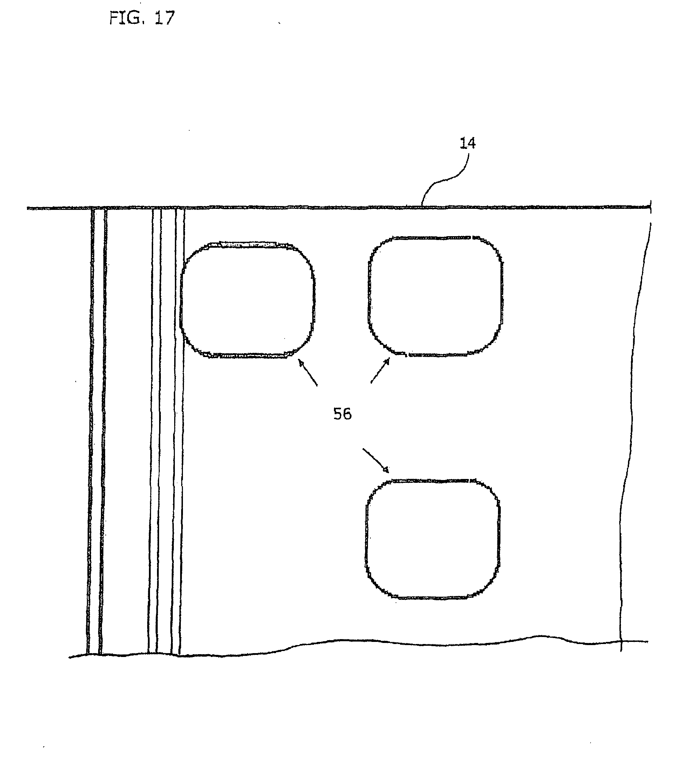

Fig. 11 zeigt eine Vorderansicht der Verriegelungsbolzen 334 und 336 in den entsprechenden Bohrungen 338 und 340. Fig. 12 zeigt eine Schnittansicht der Verriegelungsbolzen 334 und 336 in den entsprechenden Bohrungen 338 und 340. Fig. 13 zeigt eine Schnittansicht in Verriegelungsbolzenlängsrichtung des Verriegelungsbolzens 336. Fig. 14 zeigt eine Schnittansicht in Verriegelungsbolzenlängsrichtung des Verriegelungsbolzens 334. Fig. 15 zeigt eine Draufsicht beider Verriegelungsbolzen 334 und 336. Fig. 16 zeigt eine Vorderansicht des Vertikalträgers 14 mit entsprechenden Bohrungen bzw. Durchbrüchen 56, während Fig. 17 eine Hinteransicht des Vertikalträgers 14 mit entsprechenden Bohrungen bzw, Durchbrüchen 56 zeigt.

Wie insbesondere aus Fig. 13 ersichtlich ist, umfasst der Verriegelungsbolzen 336 ein erstes Bolzenelement 344 und ein zweites Bolzenelement 342. Das erste Bolzenelement 344 umfasst einen ersten Bolzenabschnitt 344.1 und einen zweiten Bolzenabschnitt 344.2, zwischen denen ein Absatz 344.3 derart angeordnet ist, dass der erste Bolzenabschnitt 344.1 einen im Wesentlichen größeren Umfang bzw. Querschnitt oder Querschnittsfläche als der zweite Bolzenabschnitt 344.2 aufweist. Darüber hinaus ist der erste Bolzenabschnitt 344.1 auf der zu dem zweiten Bolzenabschnitt 344.2 abgewandten Seite mit einem Sackloch bzw, einer Sackbohrung vorgesehen, in der ein Federelement 346, insbesondere eine Spiralfeder, eingesetzt ist. Das zweite Bolzenelement 342 umfasst einen ersten Bolzenabschnitt 342.1 und einen zweiten Bolzenabschnitt 342.2, zwischen denen ein Absatz 342.3 derart vorgesehen ist, dass der Umfang bzw. Querschnitt oder Querschnittsfläche des ersten Bolzenabschnitts 342.1 größer als der Umfang bzw. Querschnitt oder Querschnittsfläche des zweiten Bolzenabschnitts 342.2 ist. Darüber hinaus ist der erste Bolzenabschnitt 342.1 auf der zu dem zweiten Bolzenabschnitt 342.2 abgewandten Seite mit einem Sackloch bzw. einer Sackbohrung vorgesehen, in der das Federelement 346, insbesondere die Spiralfeder, eingesetzt ist. Dementsprechend sind das erste Bolzenelement 344 und das zweite Bolzenelement 342 über das Federelement 346 auf elastische Weise und bei entsprechender Kraftaufbringung relativ zueinander bewegbar verbunden. Im verbauten Zustand der Verriegelungseinrichtung 328 können die Absätze 342.3 und 344.3 der Bolzenelemente 342 und 344 aufgrund der Vorspannung des Federelements 346 maximal an einer Innenwand des Innenprofils 316 anstehen, während die Bolzenabschnitte 342.2 und 344.2 durch entsprechende Bohrungen bzw. Durchbrüche im Innenprofil 316 hindurchragen und im eingefahrenen Zustand des Innenprofils an der Innenwand des Vertikalträgers anstehen.

Wie insbesondere aus Fig. 13 ersichtlich ist, unterscheiden sich der zweite Bolzenabschnitt 344.2 des Bolzenelements 344 und der zweite Bolzenabschnitt 342.2 des Bolzenelements 342 des Verriegelungsbolzens 336 dadurch, dass der zweite Bolzenabschnitt 342.2 eine Anfasung bzw. Schräge 342.4 im Hinblick auf eine Querschnittsfläche senkrecht zur Bolzenlängsachse aufweist, auf deren Funktion nachstehend näher eingegangen wird. Dementsprechend verringert sich der Querschnitt des zweiten Bolzenabschnitts 342.2 anhand der Anfasung 342.4 kontinuierlich in Bolzenlängsachsrichtung (von links nach rechts in Figur 13). Hingegen ist der Querschnitt des zweiten Bolzenabschnitts 344.2 in Bolzeniängsachsrichtung im Wesentlichen konstant.

Wie in Fig. 14 gezeigt ist, umfasst der Verriegelungsbolzen 334 ein erstes Bolzenelement 350 und ein zweites Bolzenelement 348, die hinsichtlich deren Ausgestaltung dem Bolzenelement 342 des Verriegelungsbolzens 336 im Hinblick auf die Anfasung im Wesentlichen entsprechen. Lediglich die Ausgestaltung der Querschnittsform des Verriegelungsbolzens 334 ist unterschiedlich, worauf nachstehend noch näher eingegangen wird.

Dementsprechend sind das erste Bolzenelement 350 und das zweite Bolzenelement 348 über das Federelement 352 auf elastische Weise und bei entsprechender Kraftaufbringung relativ zueinander bewegbar verbunden.

Wie vorstehend erwähnt ist, sind die Verriegelungsbolzen 334 und 336 in das Gehäuse 332 der Verriegelungseinrichtung 328 eingesetzt, wobei die entsprechenden Bolzenelemente 350 und 348 des Verriegelungsbolzens 334 und die entsprechenden Bolzenelemente 344 und 342 des Verriegelungsbolzens 336 über die entsprechenden Federelemente 352 und 346 permanent nach außen im Hinblick auf das Gehäuse 332 so gedrückt werden, dass maximal deren jeweiliger Absatz an einer Innenwand des Innenprofils 316 anstehen kann. Die Bolzenelemente 350, 348, 344 und 342 ragen dementsprechend durch entsprechende Offnungen im Innenprofil 316 hindurch und stehen somit in der eingefahrenen Stellung des Innenprofils 316 an einer Innenwand des Vertikalprofils 14 an. Während der Bewegung in die ausgefahrene Stellung bzw. Sicherheitsstellung des Innenprofils 316 schleifen die jeweiligen Bolzenelemente 350, 348, 344 und 342 des Verriegelungsbolzens 344 und 336 zunächst an der Innenwand des Vertikalprofils 14.

Die Verriegelung des Innenprofils 316 in einer Zwischenstellung und schließlich in der Schutzstellung bzw. Sicherheitsstellung wird durch Ausbildung von Löchern bzw. Durchbrüchen 56 im Vertikalprofil 14 ermöglicht, in die die entsprechenden Bolzenelemente 344, 342, 350 und 348 der entsprechenden Verriegelungsbolzen 334 und 336 einrasten können. Wie vorstehend bereits erwähnt ist, zeigt Fig. 16 die Vorderansicht des Vertikalträgers 14, während Fig. 17 die Hinteransicht des Vertikalträgers 14 zeigt.

Wie insbesondere aus Fig. 16 ersichtlich ist, sind an einer Seite des Vertikalträgers 14, insbesondere der Vorderseite, Durchbrüche 56 in dem Vertikalträger 14 vorgesehen, wobei jeweils zwei Durchbrüche 56 auf gleicher Höhe gesehen in Längsrichtung des Vertikalträgers 14 angeordnet sind. Wie insbesondere aus Fig. 17 ersichtlich ist, sind an der anderen Seite des Vertikalträgers 14, insbesondere der Hinterseite, drei Durchbrüche 56 vorgesehen, wobei zwei Durchbrüche in gleicher Höhe gesehen in Längsrichtung des Vertikalträgers 14 angeordnet sind und ein Durchbruch 56 unterhalb der beiden oberen Durchbrüche 56 angeordnet ist. Dadurch können mehrere Rastpositionen bzw. Zwischenstellungen durch entsprechende Durchbruchgruppen in unterschiedlichen Höhen erzeugt werden. Um ein Überfahren von unteren Raststellungen bzw. Zwischenstellungen zu ermöglichen, sind die Bolzenelemente 342, 348 und 350 der Verriegelungsbolzen 336 und 334 mit den vorgenannten Anfasungen vorgesehen. Dabei sind die Anfasungen der entsprechenden Bolzenelemente 342, 348 und 350 derart ausgerichtet, dass ein Überfahren einzelner Laststellungen bzw. Zwischenstellungen in Ausfahrrichtung des Innenprofils 316 möglich ist, nicht aber in dessen Einfahrrichtung. Dementsprechend sind die Anfassungen nach oben in beispielsweise den Figuren 2, 10, 16 und 17 ausgerichtet. Dadurch sind die Bolzenelemente 342, 348 und 350 dazu imstande, die entsprechenden Raststellungen bzw. die in dieser Raststellung vorgesehenen Durchbrüche 56 anhand deren Anfasung in Ausfahrrichtung des Innenprofils 316 zu überfahren. Ein Überfahren der Durchbrüche entgegengesetzt zur Ausfahrrichtung des Innenprofils, d.h. in Einfahrrichtung des Innenprofils 316, ist dagegen nicht möglich. Lediglich das Bolzenelement 344 des Verriegelungsbolzens 336 ist ohne Anfasung vorgesehen, so dass, um ein Blockieren in der Zwischenstellung zu vermeiden, dieses Bolzenelement 344 permanent mit der Innenwand des Vertikalträgers 14 in Anlage verbleibt, bis das Innenprofil 316 dessen oberste Stellung bzw, die Sicherheitsstellung erreicht hat. Aus diesem Grund fehlt ein Durchbruch in der Zwischenstellung von Figur 17, so dass das Bolzenelement 344 in der Zwischenstellung weiterhin an der Innenwand des Vertikalträgers 14 ansteht. Erst dann, wenn die Sicherheitsstellung des Innenprofils 16 erreicht ist, rastet das Bolzenelement 344 in den entsprechenden Durchbruch 56 ein, weicher in diesem Fall in Fig. 17 der linke obere Durchbruch 56 ist.

Darüber hinaus können die Durchbrüche 56 des Vertikalprofils 14 ebenso mit schrägen Ausformungen an deren oberen Lochrand vorgesehen sein, mit Ausnahme des für die Endstellung des Innenprofils 316 vorgesehen Durchbruchs 56, in den das Bolzenelement 344 einrastet.

Mehrere Raststellungen bzw. Rastpositionen zur Festlegung entsprechender Zwischenstellungen sind vorzugsweise vorgesehen, da beispielsweise bei geschlossenem Cabrioverdeck die komplette Ausfahrhöhe des Innenprofils 316 oder durch unglückliche Zufälle die maximale Ausfahrhöhe des Innenprofils 316 nicht erreicht wird; beispielsweise dann, wenn bei einem Überschlag des Kraftfahrzeugs die Lärmschutzwand des Kraftfahrzeugs das weitere Ausfahren des Innenprofils 316 verhindert.

Wie vorstehend erwähnt ist, ist das Bolzenelement 344 des Verriegelungsbolzens 336 ohne Anfasung vorgesehen, so dass dieses Bolzenelement 344 des Verrieglungsbolzens 336 als oberer Endanschlag genutzt wird, da dieses Bolzenelement 344 somit in beiden Bewegungsrichtungen des Innenprofils 316 (d.h. in Ein- und Ausfahrrichtung des Innenprofils 316) sperrt. Dementsprechend ist der entsprechende Durchbruch 56 im Vertikalprofil 14 für dieses Bolzenelement 344 nur in der oberen Stellung, d.h. der Sicherheitsstellung, des Innenprofil 316 vorgesehen. Hingegen sperren die verbleibenden Bolzenelement 342, 348 und 350 aufgrund deren Anfasung Lediglich in einer Richtung, nämlich in Richtung zur eingefahrenen Stellung des Innenprofils 316, während ein Ausfahren des Innenprofil 316 in die Sicherheitsstellung ermöglicht bzw. durch die Anfasung und entsprechende Ausrichtung der Anfasung zugelassen wird.

Erneut Bezug nehmend auf die Figuren 10, 11 und 12 ist weiterhin ersichtlich, dass die Verriegelungsbolzen 336 und 334 unterschiedliche Geometrien, insbesondere Querschnitte bzw. Querschnittsflächen, aufweisen, um einen fehlerhaften Verbau der Verriegelungsbolzen 334 und 336 zu vermeiden. Dementsprechend sind die Bohrungen 340 und 338 des Gehäuses 332 der Verriegelungseinrichtung 328 sowie die korrespondierenden Querschnitte der Verriegelungsbolzen 334 und 336 nicht symmetrisch ausgeführt. Dadurch ist ein fehlerhafter Verbau der Verriegelungsbolzen 334 und 336 ausgeschlossen, da nur der passende Verriegelungsbolzen 334, 336 in die entsprechend ausgebildete Bohrung 338, 340 in dem Gehäuse 332 eingesetzt werden kann. Vorzugsweise wird das Gehäuse 332 der Verriegelungseinrichtung 328 in diesem Fall als Strangpressprofil ausgebildet, da sich hierdurch eine einfache und kostengünstige Ausführung ergibt. Insbesondere sind die Bohrungen 340 und 338 des Gehäuses 332 der Verriegelungseinrichtung 328 und damit auch die Verriegelungsbolzen 334 und 336 so ausgebildet, dass Letztere drehsicher in dem Gehäuse 332 gelagert sind.

Wie vorstehend bereits erwähnt ist, ist der Aktorverriegelungsbolzen 384 derart mit dem Gehäuse 332 der Verriegelungseinrichtung 328 gekoppelt, dass der nachstehend näher beschriebene Aktor 82 mit dem Aktorverriegelungsbolzen 384 in der eingefahrenen Stellung des Innenprofils 316 in Eingriff bringbar ist.

Wie im Zusammenhang mit den Figuren 10 bis 12 beschrieben ist, sind die Verriegelungsbolzen 334 und 336 derart ausgestaltet, dass es bei Übereinanderlegung von deren Querschnitte Überschneidungen in deren Länge und Breite des Querschnitts vorliegen. Dadurch können die Verriegelungsbolzen 336 und 334 nicht falsch montiert werden. Zudem ist, wie beispielsweise in Fig. 10 dargestellt ist, der linke Verriegelungsbolzen 336 asymmetrisch ausgeführt, da auf dieser Seite der Verriegelungsbolzen als Endanschlag vorgesehen ist und daher keine Gleichteile entsprechend diesem Verriegelungsbolzen 336 vorgesehen sein müssen. Darüber hinaus ist in den Fig. 10 bis 12 die asymmetrische Geometrie der entsprechenden Bohrung 340, in die der Verriegelungsbolzen 336 eingesetzt ist, dargestellt. Hingegen ist die Bohrung 338, in die der Verriegelungsbolzen 334 eingesetzt ist, symmetrisch ausgebildet. Dementsprechend dient, wie vorstehend erwähnt ist, das Bolzenelement 344 des Verriegelungsbolzens 336 als Endanschlag und sperrt (aufgrund fehlender Anfasungen) in beide vorgenannte Bewegungsrichtungen des Innenprofils 316, sobald der Verriegelungsbolzen 336 in den entsprechenden Durchbruch 56 in dem Vertikalprofil 14 eingreift. Vorzugsweise sind in diesem Ausführungsbeispiel zwei Verriegelungsbolzen mit drei Bolzenelementen, die nur in Einfahrrichtung des Innenprofils sperren, und einem Bolzenelement, das sowohl in Einfahrrichtung als auch Ausfahrrichtung des Innenprofils sperrt, vorgesehen. Es können aber ebenso mehrere Verriegelungsbolzen vorgesehen sein. Weiterhin können auch mehrere Zwischenstellungen durch entsprechende Durchbrüche im Vertikalprofil 14 vorgegeben werden.

Wie bereits vorstehend erwähnt ist, wird das Innenprofil 316 in dessen eingefahrener Stellung nahezu vollständig von dem entsprechenden Vertikalprofil 14 aufgenommen und im Falle eines Überschlags des Kraftfahrzeugs relativ zu dem Vertikalprofil 316 in dessen ausgefahrene Stellung bzw. in die Sicherheitsstellung bewegt. Insbesondere in der eingefahrenen Stellung des Innenprofils 316 sind Maßnahmen zu ergreifen, dass das Innenprofil 316 während des Fahrbetriebs des Kraftfahrzeugs in Folge von Vibrationen keine störenden Geräusche verursacht. Da die Unterbindung von störenden Geräuschen vorrangig in der eingefahrenen Stellung des Innenprofils 316 vorgenommen wird, da sie in der Sicherheitsstellung offensichtlicher Weise nicht erforderlich ist, ist aus Kostengründen auch keine Art von Gleitlager vorgesehen, weiche das Innenprofil 316 über dessen gesamten Verfahrweg führt. Die Fixierung des Innenprofils 316 erfolgt somit nur in der eingefahrenen Stellung des Innenprofils 316. Dies wird einerseits durch einen nachstehend näher beschriebenen oberen Deckel 358 oder durch mehrere Deckelelemente an einem oberen Endabschnitt am Innenprofil 316 und durch einen nachfolgend ausführlicher erläuterten unteren Deckel bzw. Bodendeckel 372 oder mehrere Deckelelemente an einem unteren Endabschnitt am Vertikalprofil 14 bewerkstelligt.

Der obere Deckel bzw. die obere Abdeckung 358 wird nachfolgend ausführlicher im Zusammenhang mit den Figuren 18 bis 22 beschrieben und dient im Wesentlichen dazu, dass die Baugruppe aus zumindest dem Vertikalprofil 14 und dem Innenprofil 316 nicht klappert.

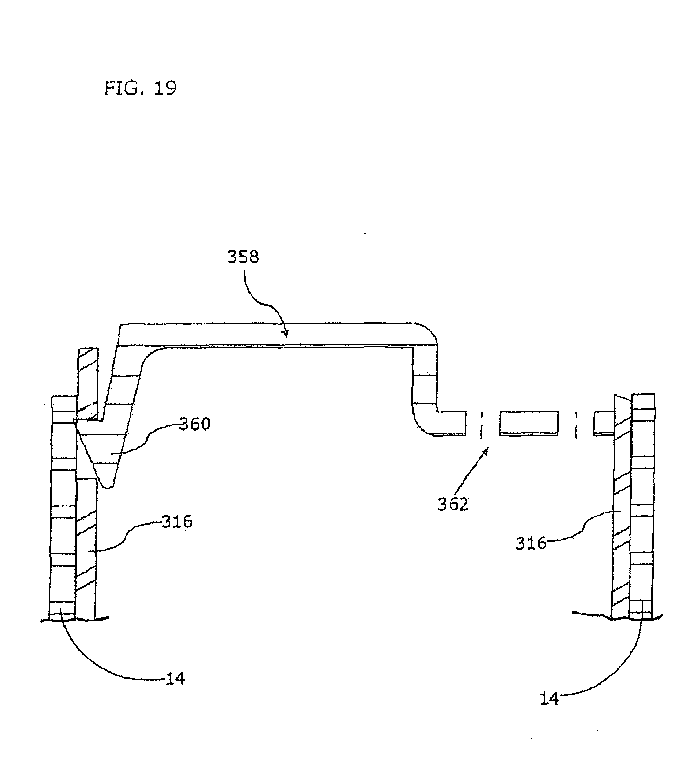

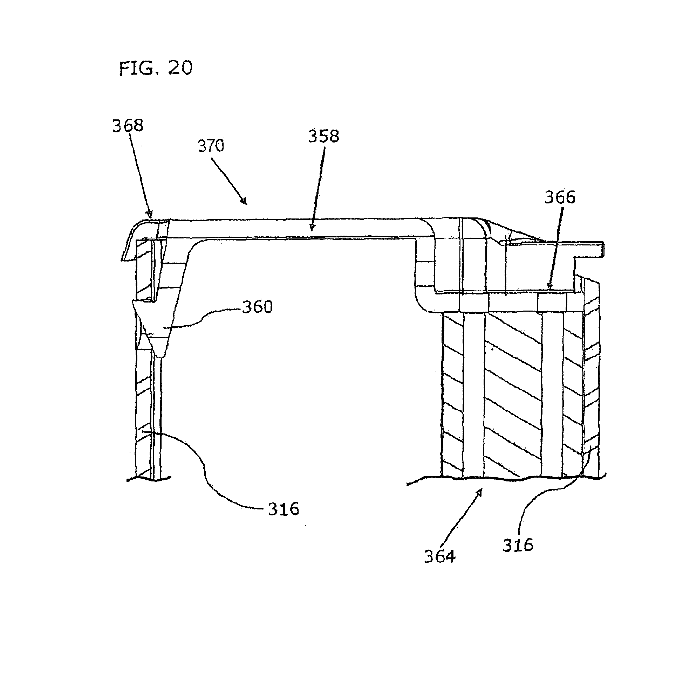

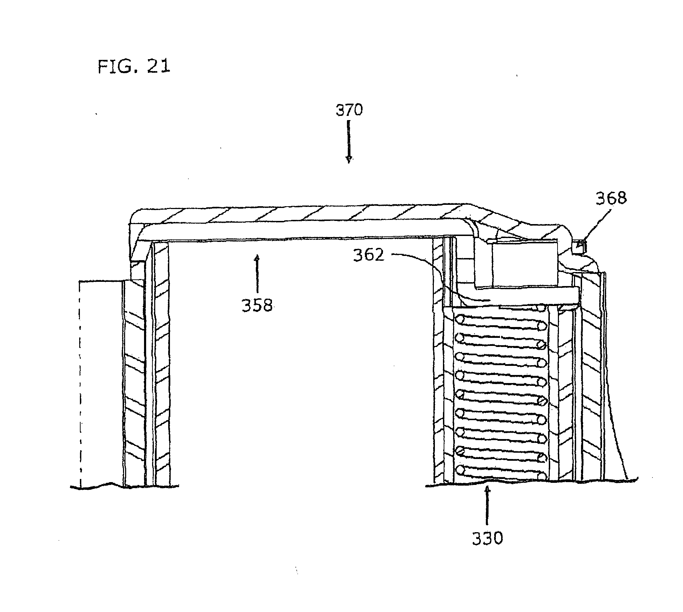

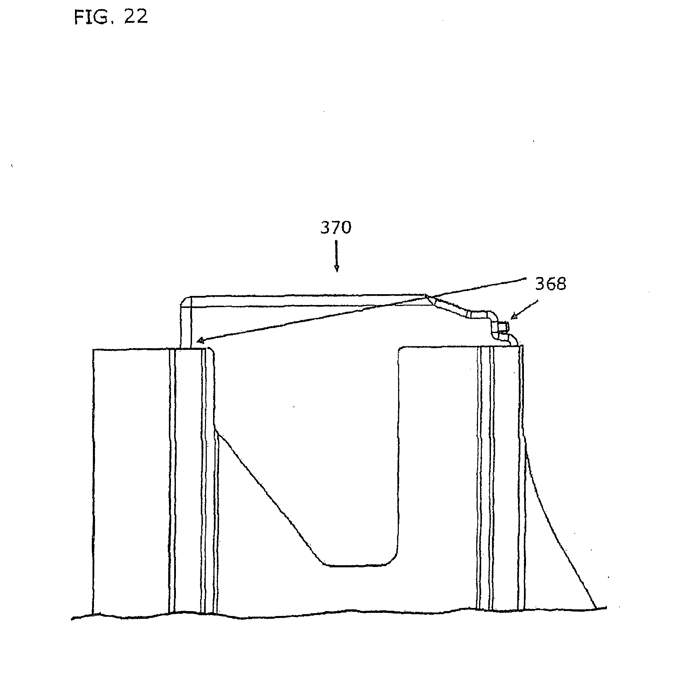

Fig. 18 zeigt eine Draufsicht des Vertikalträgers 14 und des Innenprofils 316 mit daran befestigtem oberem Deckel 358 und auf dem oberen Decke! 358 angebrachter Schutzkappe 370. Fig. 19 zeigt eine Querschnittsansicht des Vertikalträgers 14 und des Innenprofils 316 mit daran befestigtem oberen Deckel 358 entlang dem Schnitt A-A von Fig. 18. Fig. 20 zeigt eine weitere Querschnittsansicht des Vertikalträgers 14 und des Innenprofils 316 mit daran befestigtem oberem Deckel 358 von Fig. 18. Fig. 21 zeigt eine weitere Querschnittsansicht des Vertikalträgers 14 und des Innenprofils 316 mit daran befestigtem oberem Deckel 358 und Schutzkappe 370 von Fig. 18. Fig. 22 zeigt eine Seitenansicht des Vertikalträgers 14 und des Innenprofils 316 mit daran befestigtem oberem Deckel 358 und auf dem oberen Deckel 358 angebrachter Schutzkappe 370 von Fig. 18.

Wie insbesondere aus den Fig. 18 bis 21 ersichtlich ist, ist eine Abdeckung bzw. ein oberer Decke! 358, vorzugsweise eine Kunststoffabdeckung bzw. ein Kunststoffdeckel, an dem oberen Endabschnitt des in dem Vertikalprofil 14 aufgenommenen Innenprofils 316 vorgesehen (siehe insbesondere Figur 19), wobei der obere Deckel 358 vorzugsweise bei vollständig ausgefahrenem Innenprofil 316, d.h. in dessen Sicherheitsstellung, montiert wird.

Wie insbesondere aus den Figuren 19 und 20 ersichtlich ist, ist der obere Deckel 358 an einem Deckelabschnitt an der linken Seite in den Figuren 19 und 20 mit einem Haken 360 ausgestattet, welcher über ein in dem Innenprofil 316 vorgesehenes Rastloch gegen den Vertikalträger 14 mit einer bestimmten elastischen Kraft drückt. Dadurch wird ein Innenprofilabschnitt (auf der rechten Seite in Fig. 19) des Innenprofils 316 gegen eine Innenwand des Vertikalträgers 14 gedrückt, wodurch im Fahrbetrieb des Kraftfahrzeugs bei eingefahrenem Innenprofil 316 ein Klappern vermieden werden kann.

Vorzugsweise ist der Haken 360 an dem Deckelabschnitt so ausgebildet, dass dessen Abschrägung so geformt ist, dass möglichst keine Bruchgefahr bzw. Abscherung des Hakens 360 bei Rückstellung des Innenprofils 316 in dessen eingefahrene Stellung in dem Vertikalprofil 14 auftritt. Somit übernimmt der obere Deckel 358 im Hinblick auf die angestrebte Funktionsintegration mehrere Funktionen. Zum einen dient der obere Deckel 358 zum Verhindern eines Klapperns aufgrund des Innenprofils 316 während des Fahrbetriebs des Kraftfahrzeugs. Zum anderen bildet der obere Deckel 358 mit einem Abstützabschnitt 362 eine Abstützfläche für die Druckfedereinrichtung 330, insbesondere für die Druckfedern der Druckfedereinrichtung 330, aus. Insbesondere dient der Abstützabschnitt 362 der Abdeckung 358 zur Befestigung einer Federführung bzw. einer Druckfederführungseinrichtung 364, die insbesondere in Fig. 20 dargestellt ist. Vorzugsweise wird die Federführungseinrichtung 364 der Druckfedereinrichtung 330 durch in diesem Fall zwei miteinander gekoppelte Hohlzylinder ausgebildet, die jeweils mittig einen Zapfen aufweisen, so dass jeweils eine Spiralfeder der Druckfedereinrichtung 330 in den entsprechenden Hohlzylindern zwischen dem Zapfen und dem entsprechenden Hohlzylinder aufgenommen werden kann. Vorzugsweise ist der entsprechende Zapfen der jeweiligen Hohlzylinder ebenso mit dem oberen Deckel 358 gekoppelt.

Der obere Deckel 358 fungiert somit als Klapperschutz, Befestigung für die Federführungseinrichtung 364 der Druckfedereinrichtung 330, als Anlagefläche für die Druckfedern der Druckfedereinrichtung 330 und als Befestigung einer Schutzkappe 370 gegen Verschmutzung, wobei die Schutzkappe insbesondere in den Fig. 20 bis 22 dargestellt ist. Die Schutzkappe 370 ist insbesondere derart ausgestaltet, dass sie die in dem Vertikalprofil 14 vorgesehenen Verriegelungsöffnungen bzw. Durchbrüche 56 und die Spalte zwischen dem Vertikalträgers 14 und dem Innenprofil 316 abdeckt, wodurch eine Verschmutzung weitgehend unterbunden wird. Ferner ist die Schutzkappe 370 über an dem oberen Deckel 358 vorgesehene Laschen 368, wie beispielsweise aus den Figuren 20 bis 22 ersichtlich ist, an dem oberen Endabschnitt des Innenprofils 316 über den oberen Decke! 358 befestigt. Aufgrund der Ausgestaltung des Innenprofils 316 verbleibt ein Zwischenraum zwischen dem Innenprofil 316 und dem Vertikalprofil 14, so dass die Schutzkappe über eine Rasteinrichtung in entsprechende an dem Innenprofil vorgesehene Rastlöcher in dem Zwischenraum einrasten kann. Wie insbesondere aus Figur 22 ersichtlich ist, erstreckt sich die Schutzkappe 370 vorzugsweise zumindest teilweise oder vollständig über den gesamten Vertikalträgers 14.

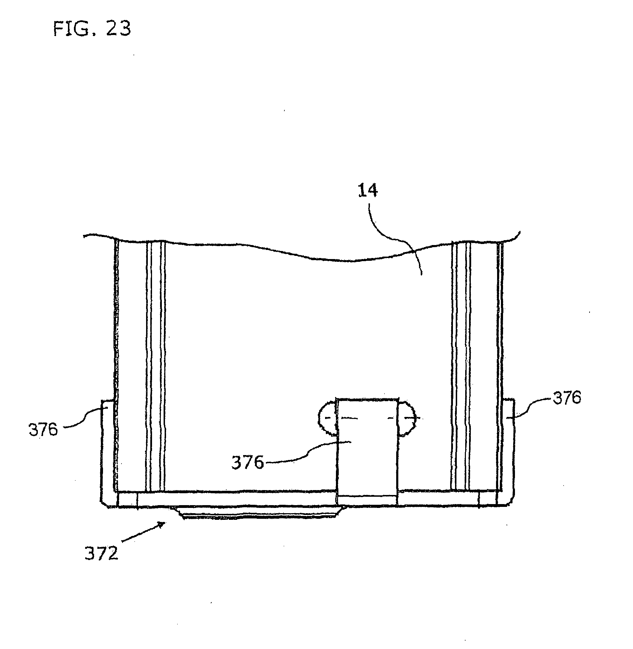

Weiterhin ist, wie vorstehend erwähnt ist, der untere Deckel bzw. der Bodendeckel 372 am unteren Endabschnitt des Vertikalprofils 14 vorgesehen, welcher nachfolgend im Zusammenhang mit den Figuren 23 bis 26 näher erläutert wird.

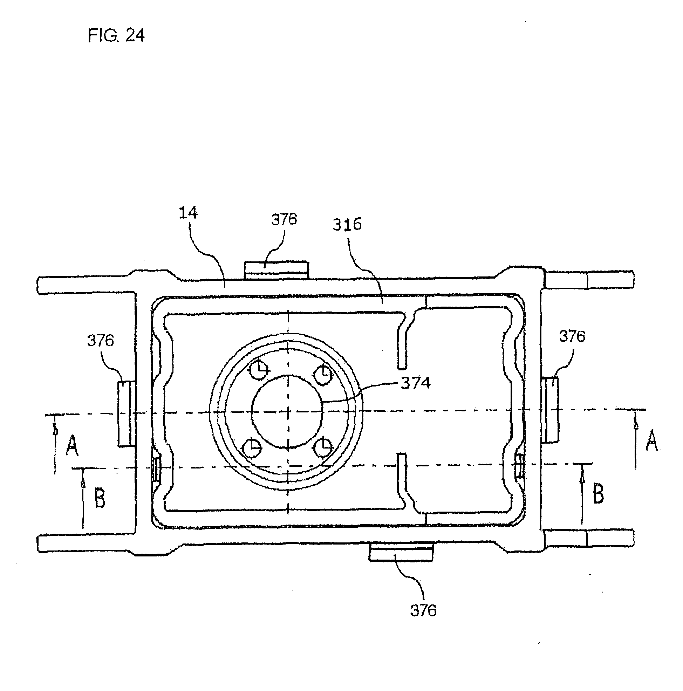

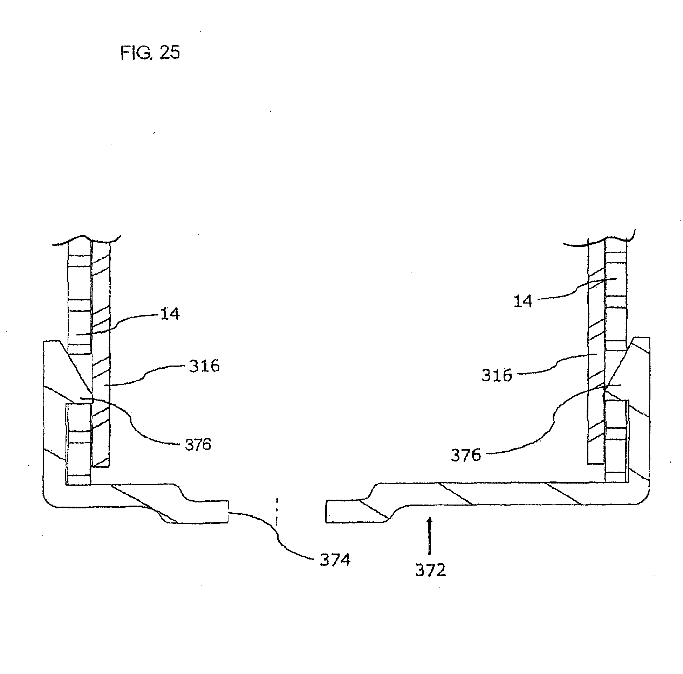

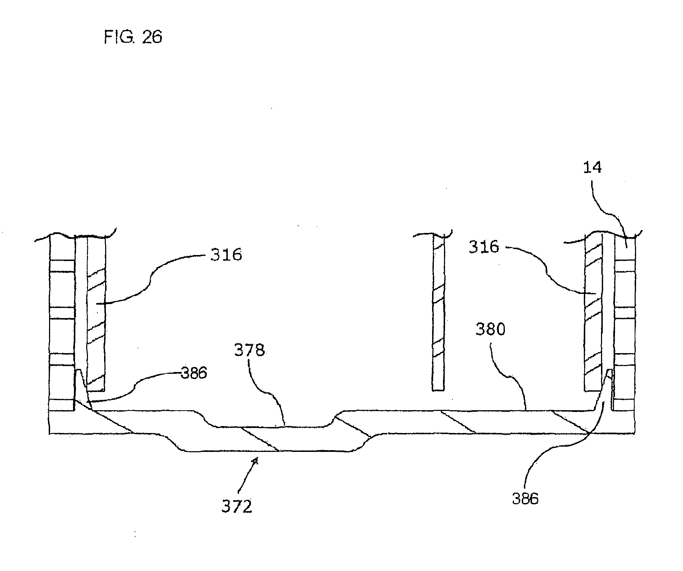

Fig. 23 zeigt eine Seitenansicht eines unteren Abschnitts des Vertikalprofils 14. Fig. 24 zeigt eine Draufsicht des Vertikalprofils 14 von Fig. 23. Fig. 25 zeigt eine Schnittansicht des Vertikalprofils 14 von Fig. 24 entlang dem Schnitt A-A. Fig. 26 zeigt eine weitere Schnittansicht des Vertikalprofils 14 von Fig. 24 entlang dem Schnitt B-B.

Wie aus den Fig. 23 bis 26 ersichtlich ist, ist eine weitere Abdeckung bzw. ein unterer Deckel 372 an dem unteren Endabschnitt des Vertikalprofils 14 vorgesehen. Insbesondere wird der untere Deckel 372 auf das Vertikalprofil 14 montiert, indem an entsprechenden Abschnitten des unteren Deckels 372 vorgesehene Cliphaken 376 in dem Vertikalprofil 14 vorgesehene Löcher bzw. Durchbrüche durchgreifen und dabei in Anlage mit dem Innenprofil 316 gelangen. Weiterhin sind an den verbleibenden Abschnitten des unteren Deckels 372 Ansätze 386 vorgesehen, die zwischen dem Vertikalprofil 14 und dem eingefahrenen Innenprofil 316 vorgesehen sind und dadurch ein Klappern des Innenprofiis 316 in dessen eingefahrener Stellung verhindern, wie insbesondere in Fig. 26 ersichtlich ist.

Darüber hinaus ist der untere Deckel 372 mit einer Montagebohrung 374 sowie Befestigungsbohrungen vorgesehen, wie insbesondere aus den Fig. 24 und 25 ersichtlich ist. Anhand dieser Bohrungen kann die Montage des Aktors 82 vorgenommen werden. In Figur 26 ist in diesem Zusammenhang die die Bohrung 374 umgebende Auflagefläche 378 für den Aktor 82 erkennbar, welche im Hinblick auf die verbleibenden Deckelabschnitte leicht nach unten bei gleich bleibender Deckeldicke in Figur 26 versetzt ist. Darüber hinaus dient der untere Deckel 372 weiterhin als eine Abstützung für die Druckfedereinrichtung 330, insbesondere für die Druckfedern der Druckfedereinrichtung 330. Demzufolge fungiert der untere Deckel 372 als Klapperschutz, Auflagefläche für die Druckfedern der Druckfedereinrichtung 330 sowie zur Befestigung des Aktors 82.

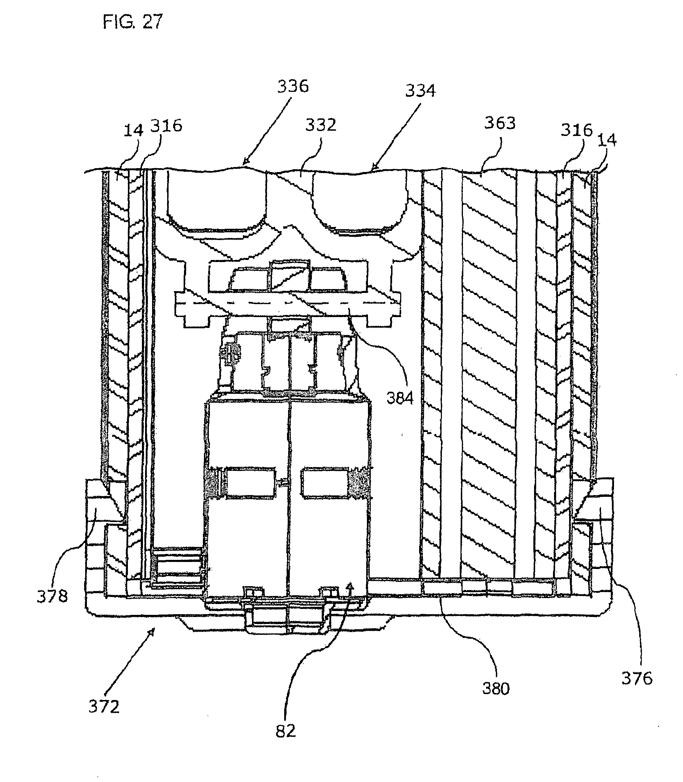

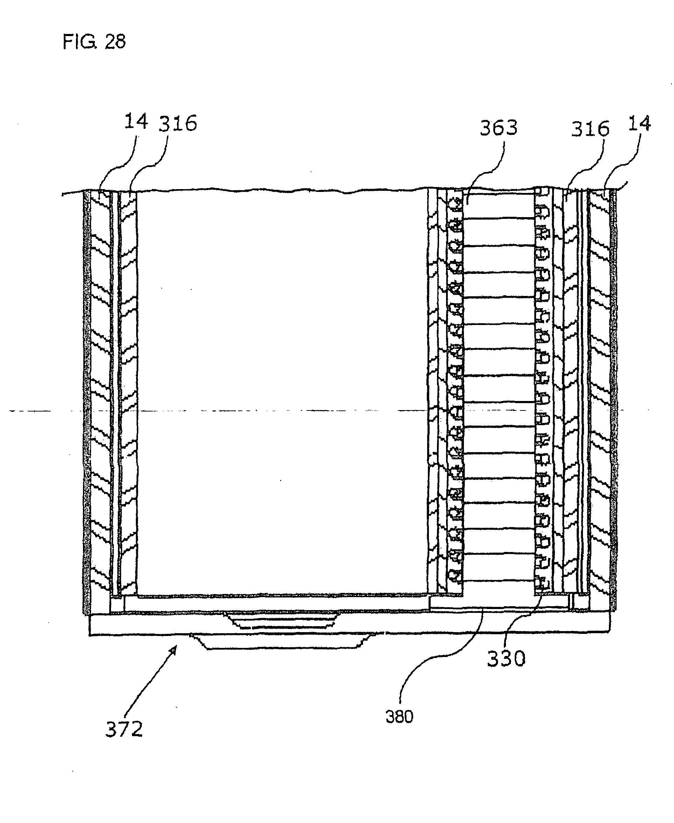

Fig. 27 zeigt eine Schnittansicht eines unteren Endabschnitts des Vertikalträgers 14, bei der Aktor 82 mit dem Aktorverriegelungsbolzen 384 in Eingriff steht, wobei Fig. 28 eine weitere Schnittansicht des unteren Abschnitts des Vertikalträgers 14 zeigt, bei der der Aktor 82 weggelassen ist.

Wie aus den Fig. 27 und 28 ersichtlich ist, dient die weitere Abdeckung bzw. der untere Deckel 372 zum einen zur Befestigung des Aktors 82 anhand der Montagebohrung 374, wie insbesondere aus Fig. 28 ersichtlich ist, als Auflagefläche 380 für die Druckfedern der Druckfedereinrichtung 330, wie insbesondere aus Fig. 28 ersichtlich ist, und als Klapperschutz, wie insbesondere in Fig. 26 ersichtlich ist, Fig. 27 zeigt dabei einen Zustand des Aktors 82, bei dem der Aktor 82 in den Aktorverriegelungsbolzen 384 des Gehäuses 332 eingreift.

Durch den konsequenten Ansatz der Funktionsintegration bei einigen Komponenten des Überrollschutzsystems ergibt sich insgesamt ein sehr kleiner Bauraum und entsprechende Gewichtseinsparungen bei dem Überrollschutzsystem.

Der Betrieb des Überrollschutzsystems 1 gestaltet sich wie folgt:
Zurächst wird von einer eingefahrenen Stellung des Innenprofils 316 ausgegangen, die beispielsweise in Figur 2 gezeigt ist. In diesem Zustand befinden sich die Druckfedern der Druckfedereinrichtung 330 in einen vorgespannten Zustand durch Abstützung an dem untern Deckel 372 und an dem oberen Deckel 358. Wird der Aktor 82 aufgrund eines Sensorsignal eines nicht dargestellten Sensors betätigt, so wird die Kopplung zwischen dem Aktorverriegelungsbolzen 384 und dem Aktor 82, insbesondere mit einem Haken des Aktors 82, gelöst. Dadurch bewegen die Druckfedern der Druckfedereinrichtung 330 das Innenprofil 316 in dessen Zwischenstellungen sowie in die Sicherheitsstellung. Die fest mit dem Innenprofil 316 gekoppelte Verriegelungseinrichtung 328 sowie die mit dem Innenprofil 316 oder mit dem oberen Deckel 358 gekoppelte Federführungseinrichtung 380 bewegen sich dabei mit dem Innenprofil 316 mit. Während der Bewegung des Innenprofils 316 zur Zwischenstellung schleifen die Bolzenelemente 344, 342, 348 und 350 der Verriegelungsbolzen 336 und 334 an der Innenwand des Vertikalprofils 14. Bei Erreichen der Zwischenstellung des Innenprofils 316 rasten das Bolzenelement 342 des Verriegelungsbolzens 336 und die Bolzenelemente 350 und 348 des Verriegelungsbolzens 334 in die ihnen zugeordneten Durchbrüche 56 im Vertikalprofil ein. Das Bolzenelement 344 des Verriegelungsbolzens 336 steht weiterhin an der Innenwand des Vertikalträgers 14 an, da für dieses Bolzenelement 344 in der Zwischenstellung des Innenprofils kein entsprechender Durchbruch in dem Vertikalprofil 14 vorgesehen ist. Somit verhindern die Bolzenelemente 342, 350 und 348 ein Einfahren des Innenprofils 316 in dessen eingefahrene Stellung, jedoch nicht in Richtung der Sicherheitsstellung des Innenprofils 316. Aufgrund der Anfasungen der Bolzenelemente 342, 350 und 348 wird die Zwischenstellung des Innenprofils 316 aufgrund der treibenden Kraft der Druckfedern der Druckfedereinrichtung 330 überfahren, so dass das Innenprofil 316 in dessen Sicherheitsstellung gelangt. In der Sicherheitsstellung rasten sämtliche Bolzenelemente 344, 342, 350 und 348 der Verriegelungsbolzen 336 und 334 in die ihnen zugeordneten Durchbrüche 56 der Sicherheitsstellung ein. Dabei dient das Bolzenelement 344 als Endanschlag, so dass das Innenprofil 316 nicht weiter ausgefahren werden kann.

### Bezugszeichenliste:

- 1: Überrolischutzsystem
- 10: Rahmenvorrichtung
- 12: Querträger
- 14: Vertikalträger
- 16: Innenprofil
- 16.1: Steg
- 16.2: Seitenwandabschnitt
- 16.3: Wandabschnitt
- 18: Anbindung
- 20: Eckabschnitte
- 22: Flanschabschnitte
- 24: erster Innenraum
- 26: zweiter Innenraum
- 56: Durchbrüche
- 82: Aktor
- 116: Innenprofil
- 116.1: Steg
- 116.2: Seitenwandabschnitt
- 116.3: Wandabschnitt
- 124: erster Innenraum
- 126: zweiter Innenraum
- 216: Innenprofil
- 216.1: Steg
- 216.2: Seitenwandabschnitt
- 216.3: Wandabschnitt
- 224: erster Innenraum
- 226: zweiter Innenraum
- 316: Innenprofil
- 316.1: Steg
- 316.2: Seitenwandabschnitt
- 316.3: Wandabschnitt
- 324: erster Innenraum
- 326: zweiter Innenraum
- 328: Verriegelungseinrichtung
- 330: Druckfedereinrichtung
- 332: Gehäuse
- 334: Verriegelungsbolzen
- 336: Verriegelungsbolzen
- 338: Bohrung
- 340: Bohrung
- 342: Bolzenelement
- 342.1: Bolzenabschnitt

- 342.2: Bolzenabschnitt
- 342.3: Absatz
- 342.4: Anfasung
- 344: Bolzenelement
- 344.1: Bolzenabschnitt
- 344.2: Bolzenabschnitt
- 342.3: Absatz
- 346: Federelement
- 348: Bolzenelement
- 350: Bolzenelement
- 352: Federelement
- 358: oberer Deckel
- 360: Haken
- 362: Abstützabschnitt
- 364: Federführungseinrichtung
- 368: Lasche
- 370: Schutzabdeckung
- 372: unterer Deckel
- 374: Bohrung
- 376: Cliphaken
- 378: Auflagefläche
- 380: Auflagefläche
- 384: Aktorverriegelungsbolzen
- 386: Ansatz

## Patentansprüche

1. Rahmenvorrichtung (10) für ein Überrollschutzsystem (1) für ein Fahrzeug, mit einem Profilelement (16), das zwischen einer ersten Stellung und einer sich von der ersten Stellung unterscheidenden zweiten Stellung verfahrbar ist, wobei ein Profilquerschnitt des Profilelements (16) derart ausgebildet ist, dass ein oder mehrere Einrichtungen des Überrollschutzsystems (1) in dem Profilelement (16) teilweise oder vollständig aufgenommen und festgelegt werden können, **dadurch gekennzeichnet, dass** das Profilelement (16) derart ausgebildet ist, dass das Profilelement (16) zumindest einen ersten Innenraum (324) zur Aufnahme und Festlegung einer Einrichtung des Überrollschutzsystems (1) und einen zweiten Innenraum (326) zur Aufnahme und Festlegung einer weiteren Einrichtung des Überrollschutzsystems aufweist, die durch einen Steg (16.1) voneinander räumlich getrennt oder über einen durch den Steg oder mehrere Stege gebildeten Durchgang miteinander verbunden sind.

2. Rahmenvorrichtung (10) gemäß Anspruch 1, wobei der Steg (16.1) oder die Stege im Querschnitt konvex oder konkav oder mit Einund/oder Ausbuchtungen ausgebildet sind.

3. Rahmenvorrichtung (10) gemäß einem der Ansprüche 1 bis 2, wobei zumindest ein Wandabschnitt des Profilelements (16) im Querschnitt konvex, konkav oder mit Ein- und/oder Ausbuchtungen ausgebildet ist.

4. Rahmenvorrichtung (10) gemäß einem der Ansprüche 1 bis 3, wobei gegenüberliegende Wandabschnitte des Profilelements (16) im Querschnitt konvex, konkav oder mit Ein- und/oder Ausbuchtungen ausgebildet sind.

5. Rahmenvorrichtung (10) gemäß Anspruch 4, wobei verbleibende gegenüberliegende Wandabschnitte des Profilelements (16) im Querschnitt geradlinig ausgebildet sind.

6. Rahmenvorrichtung (10) gemäß einem der Ansprüche 1 bis 5, wobei die zumindest eine Einrichtung des Überrollschutzsystems (1) in dem Profilelement (14) durch Vorsehen des Stegs oder der Stege und/oder einer Verklebung und/oder einer Verschraubung festgelegt wird.

7. Rahmenvorrichtung (10) gemäß Anspruch 6, wobei das Profilelement (16) in einem weiteren, insbesondere mit einer Fahrzeugstruktur gekoppelten, Profilelement (14) verfahrbar gelagert ist.

8. Rahmenvorrichtung (10) gemäß einem der Ansprüche 1 bis 7, wobei das Profilelement (16) zumindest teilweise einen Überrollschutzbügel des Überrollschutzsystems (1) ausbildet und/oder die Arretiereinrichtung (328) durch eine Verriegelungseinrichtung ausgebildet und/oder die Kraftbeaufschlagungseinrichtung (330) durch eine Druckfedereinrichtung ausgebildet wird.

9. Überrollschutzsystem für ein Fahrzeug, insbesondere für ein Kraftfahrzeug, mit einer Rahmenvorrichtung (10) gemäß einem der Ansprüche 1 bis 8.

## Claims

1. A frame assembly (10) for a vehicle rollover protection system (1), with a profile element (16) that can traverse between a first position and a second position differing from the first position, wherein a profile cross section of the profile element (16) is designed in such a way that one or more fittings of the rollover protection system (1) can be partially or completely incorporated and fixed in place in the profile element, **characterized in that** the profile element (16) is designed in such a way that the profile element (16) exhibits at least a first interior space (324) for accommodating and fixing in place a fitting of the rollover protection system (1) and a second interior space (326) for accommodating and fixing in place another fitting of the rollover protection system, which are spatially separated from each other by a web (16.1) or joined together via a passage formed by the web or several webs.

2. The frame assembly (10) according to claim 1, wherein the web (16.1) or the webs have a convex or concave cross section, or are designed with recesses and/or bulges.

3. The frame assembly (10) according to one of claims 1 to 2, wherein the at least one wall section of the profile element (16) has a convex or concave cross section, or is designed with recesses and/or bulges.

4. The frame assembly (10) according to one of claims 1 to 3, wherein opposing wall sections of the profile element (16) have a convex or concave cross section, or are designed with recesses and/or bulges.

5. The frame assembly (10) according to claim 4, wherein remaining opposing walls sections of the profile element (16) have a linear cross section.

6. The frame assembly (10) according to one of claims 1 to 5, wherein the at least one fitting of the rollover protection system (1) is fixed in place in the profile element (14) by providing the web or webs and/or an adhesive bond and/or a screw connection.

7. The frame assembly (10) according to claim 6, wherein the profile element (16) is movably mounted in another profile element (14), in particular one coupled with a vehicle structure.

8. The frame assembly (10) according to one of claims 1 to 7, wherein the profile element (16) at least partially forms a rollover protection bracket of the rollover protection system (1) and/or the locking device (328) is designed like a latching device and/or the force-applying device (330) is designed like a compression spring device.

9. Rollover protection system for a vehicle, in particular for a motor vehicle, with a frame assembly (10) according to one of claims 1 to 8.

## Revendications

1. Dispositif de cadre (10) pour un système de protection contre le renversement (1) destiné à un véhicule, comprenant un élément profilé (16), qui est déplaçable entre une première position et une deuxième position se distinguant de la première position, une section transversale profilée de l'élément profilé (16) étant réalisée de telle manière qu'un ou plusieurs équipements du système de protection contre le renversement (1) peuvent être logés et fixés en partie ou en totalité dans l'élément profilé (16), **caractérisé en ce que** l'élément profilé (16) est réalisé de telle manière que l'élément profilé (16) présente au moins un premier espace intérieur (324) servant à loger et à fixer un équipement du système de protection contre le renversement (1) et un deuxième espace intérieur (326) servant à loger et à fixer un autre équipement du système de protection contre le renversement, lesquels sont séparés spatialement l'un de l'autre par une entretoise (16.1) ou sont reliés à l'un à l'autre par l'intermédiaire d'un passage formé par l'entretoise ou par plusieurs entretoises.

2. Dispositif de cadre (10) selon la revendication 1, l'entretoise (16.1) ou les entretoises étant réalisées dans la section transversale de manière convexe ou de manière concave ou avec des indentations et/ou des renflements.

3. Dispositif de cadre (10) selon l'une quelconque des revendications 1 à 2, au moins une section de paroi de l'élément profilé (16) étant réalisée dans la section transversale de manière convexe, de manière concave ou avec des indentations et/ou des renflements.

4. Dispositif de cadre (10) selon l'une quelconque des revendications 1 à 3, des sections de paroi opposées de l'élément profilé (16) étant réalisées dans la section transversale de manière convexe, de manière concave ou avec des indentations et/ou des renflements.

5. Dispositif de cadre (10) selon la revendication 4, des sections de paroi restantes opposées de l'élément profilé (16) étant réalisées dans la section transversale de manière rectiligne.

6. Dispositif de cadre (10) selon l'une quelconque des revendications 1 à 5, l'au moins un équipement du système de protection contre le renversement (1) étant fixé dans l'élément profilé (14) en prévoyant l'entretoise ou les entretoises et/ou un collage et/ou un vissage.

7. Dispositif de cadre (10) selon la revendication 6, l'élément profilé (16) étant logé de manière déplaçable dans un autre élément profilé (14) couplé en particulier à une structure de véhicule.

8. Dispositif de cadre (10) selon l'une quelconque des revendications 1 à 7, l'élément profilé (16) réalisant au moins en partie un arceau de protection contre le renversement du système de protection contre le renversement (1) et/ou l'équipement de blocage (328) étant réalisé par un équipement de verrouillage et/ou l'équipement d'application de force (330) étant réalisé par un équipement de ressort de pression.

9. Système de protection contre le renversement destiné à un véhicule, en particulier à un véhicule automobile, comprenant un dispositif de cadre (10) selon l'une quelconque des revendications 1 à 8.
